(19) **Europäisches Patentamt European Patent Office Office européen des brevets**

(11) **EP 4 457 791 B1**

(12) **EUROPEAN PATENT SPECIFICATION**

(45) Date of publication and mention
of the grant of the patent:
**02.07.2025 Bulletin 2025/27**

(21) Application number: **23825515.2**

(22) Date of filing: **15.11.2023**

(51) International Patent Classification (IPC):
$G08G\ 1/01^{(2006.01)}$     $G05D\ 1/644^{(2024.01)}$
$G05D\ 1/648^{(2024.01)}$     $G05D\ 1/69^{(2024.01)}$
$G06N\ 3/04^{(2023.01)}$     $G06N\ 7/00^{(2023.01)}$
$G06N\ 20/00^{(2019.01)}$     $G08G\ 1/04^{(2006.01)}$
$G08G\ 1/065^{(2006.01)}$     $G08G\ 1/08^{(2006.01)}$

(52) Cooperative Patent Classification (CPC):
**G08G 1/0116; G06N 3/04; G06N 3/045; G06N 7/00;
G06N 20/00; G08G 1/0129; G08G 1/0133;
G08G 1/0141; G08G 1/0145; G08G 1/04;
G08G 1/065; G08G 1/08**

(86) International application number:
**PCT/JP2023/041900**

(87) International publication number:
**WO 2024/189988 (19.09.2024 Gazette 2024/38)**

(54) **SYSTEM AND METHOD FOR ESTIMATING A FUTURE TRAFFIC DENSITY IN AN ENVIRONMENT**

SYSTEM UND VERFAHREN ZUR SCHÄTZUNG EINER ZUKÜNFTIGEN VERKEHRSDICHTE IN
EINER UMGEBUNG

SYSTÈME ET PROCÉDÉ D'ESTIMATION D'UNE FUTURE DENSITÉ DE TRAFIC DANS UN
ENVIRONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.03.2023 US 202318181603**

(43) Date of publication of application:
**06.11.2024 Bulletin 2024/45**

(73) Proprietor: **MITSUBISHI ELECTRIC
CORPORATION
Chiyoda-ku
Tokyo 100-8310 (JP)**

(72) Inventors:
• **ZHANG, Jing
Massachusetts 02139-1955 (US)**
• **WANG, Yinsong
Massachusetts 02139-1955 (US)**
• **NIKOVSKI, Daniel
Massachusetts 02139-1955 (US)**

(74) Representative: **Pfenning, Meinig & Partner mbB
Patent- und Rechtsanwälte
Theresienhöhe 11a
80339 München (DE)**

(56) References cited:
**WO-A1-2020/072667**     **CN-A- 115 042 798
US-A1- 2017 032 669**     **US-A1- 2020 042 799**

• **WANG YINSONG ET AL: "Estimating traffic
density using transformer decoders",
PROCEDIA COMPUTER SCIENCE, vol. 220, 1
January 2023 (2023-01-01), AMSTERDAM, NL,
pages 1027 - 1032, XP093131356, ISSN:
1877-0509, Retrieved from the Internet
<URL:https://dx.doi.org/10.1016/j.
procs.2023.03.143> DOI: 10.1016/
j.procs.2023.03.143**

EP 4 457 791 B1

    **(Cont. next page)**

- **VASWANI VASWANI ASHISH ASHISH ET AL: "Attention Is All You Need", 12 June 2017 (2017-06-12), XP093045849, Retrieved from the Internet <URL:https://arxiv.org/pdf/1706.03762. pdf> [retrieved on 20230510], DOI: 10.48550/ ARXIV.1706.03762**

**Description**

[Technical Field]

The present disclosure relates generally to traffic density estimation, and more particularly to a system and a method for estimating a future traffic density in an environment.

[Background Art]

Prediction of traffic density in an environment is crucial for congestion prediction and route planning. For instance, understanding of the traffic density, in an area of a city including multiple roads, has been of significant interest to transportation researchers, transportation engineers, road engineers, urban planners, policy makers, economists, vehicle manufacturers, and commuters who rely on transportation on a daily basis. Likewise, understanding of the traffic density in an indoor space is important, for example, for determining a schedule for deployment of service robots in the indoor space.

Model-driven methods may be used for prediction of the traffic density. The model-driven methods rely on a network topology that describes a system of interest. For example, simulation models utilize a pre-defined network topology and system logic to simulate a traffic condition. However, the model-driven methods require a laborious tuning and calibration process, and significant human involvement to produce an optimal network topology and system logic. Therefore, there is still a need for a system and a method for predicting the traffic density in the environment.

The following reference observes that dominant sequence transduction models are based on complex recurrent or convolutional neural networks that include an encoder and a decoder connected through an attention mechanism and proposes a simple network architecture, the Transformer, based solely on attention mechanisms, dispensing with recurrence and convolutions entirely: Vaswani Ashish ET AL: "Attention Is All You Need", 12 June 2017 (2017-06-12), XP093045849, DOI: 10.48550/ARXIV.1706.03762.

US2020042799A1 discloses a method for point-to-point traffic prediction, involves obtaining time-series locations of multiple vehicles respectively associated with computing devices by processor and from multiple computing devices and obtaining traffic volume.

[Summary of Invention]

It is an object of some embodiments to estimate a future traffic density in an environment. The environment may be an indoor space (for example, an office space) or an outdoor space (for example, an area of a city including roads). The environment includes multiple ingress points and egress points. The present disclosure provides a traffic density estimation model for estimating the future traffic density in the environment. The traffic density estimation model includes a trajectory prediction model, an entering particle prediction model, and an iterative sampling model. Some embodiments are based on the recognition that the traffic density in the environment depends on movements of objects (e.g., persons) existing in the environment at a given time. The trajectory prediction model accounts for the movements of the existing objects by predicting trajectories of the existing objects.

The invention is defined in the independent claims. A partial trajectory of an object is applied as an input to the trajectory prediction model. The object is moving from an ingress point of the multiple ingress points to an egress point of the multiple egress points in the environment. The partial trajectory is represented by a location sequence, e.g., [1,3,2,0,0,0,0,0,0,0] of length nine. For example, there may be six different locations (1-6) in total in the environment. The partial trajectory may depict that a location of the object in the environment at time instant t1 is 1, the location of the object in the environment at time instant t2 is 3, and the location of the object in the environment at time instant t3 is 2. Such a partial trajectory is input to the trajectory prediction model to predict the location of the object at next time instant t4 (also referred to as future time instant).

At a first prediction step, the partial trajectory is input to the trajectory prediction model and the trajectory prediction model outputs a probability distribution of object's location over multiple locations, for example, six locations (1-6). The probability distribution indicates a probability of the object being at each of the six locations (1-6) at time instant t4. For example, the probability distribution indicates that the probability of the object being at location 5 at the time instant t4 is 0.6.

Some embodiments are based on the realization that the object may be represented by a number of particles, e.g., five particles, and each particle is treated independently. The number of particles may be specified by a user. Each particle may follow a different trajectory. To that end, a location of each particle at the time instant t4 is to be predicted. To predict the location of each particle at the time instant t4, a location is sampled from the probability distribution and the sampled location is appended to the trajectory of the particle. For instance, for a trajectory of particle-1 of the five particles, the location of the particle-1 at the time instant t4 is predicted to be 5 by sampling the probability distribution. Likewise, for each particle's trajectory, the location at the time instant t4 is predicted to determine updated trajectories corresponding to the five particles.

Some embodiments are based on the realization that, for the environment with constant entering and exiting objects, the traffic density estimation model should account for objects that may initiate new trajectories at the ingress points at the next time instant, to accurately estimate the future traffic density. In other words, entering particles are to be predicted to accurately estimate the future traffic density. The traffic density estimation model includes the entering particle prediction model for predicting the entering particles.

A sequence of observation vectors $\{z_i \in [0,1]^m\}_{i=1}^{T}$ is input to the entering particle prediction model. Each element of the observation vector is a binary variable with 1 indicating there is an entering particle and 0 for no observation. For example, the sequence of observation vectors may be obtained from cameras installed in the environment. In an example, if at time $i = 2$, the object (e.g., person) started to move from location 3 and was captured by the camera, then $z_2[3]$ = 1 and all other entries of $z_2$ (a vector) are zero. The entering particle prediction model outputs a multinomial probability vector. The multinomial probability vector indicates a probability of observing an entering particle at each of the ingress points at the next time instant. Further, based on the multinomial probability vector, a next observation vector is predicted and appended to the sequence of observation vectors to determine an updated sequence of observation vectors.

Further, the updated trajectories corresponding to the five particles and the updated sequence of observation vectors are input to the iterative sampling model. Based on the updated trajectories and the updated sequence of observation vectors, the iterative sampling model estimates the future traffic density for the next time instant.

In some embodiments, the multiple partial trajectories of different objects are input to the trajectory prediction model. For example, a partial trajectory of object-1, a partial trajectory of object-2, and a partial trajectory of object-3 are input to the trajectory prediction model, at the first prediction step. The trajectory prediction model outputs a probability distribution of object-1's location over the six locations (1-6) at the next time instant, a probability distribution of object-2's location over the six locations at the next time instant, and a probability distribution of object-3's location over the six locations at the next time instant. Further, the probability distribution of object-1's location, the probability distribution 129b the object-2's location, and the probability distribution 131b the object-3's location are averaged to determine an aggregated multinomial probability vector. The aggregated multinomial probability vector indicates final predicted probabilities of the object's location over the six locations.

The aggregated multinomial probability vector and the multinomial probability vector are input to the iterative sampling model. Based on the multinomial probability vector and the aggregated multinomial probability vector, the iterative sampling model estimates the future traffic density for the next time instant. In particular, the iterative sampling model outputs samples of future objects from an averaged vector of the multinomial probability vector and the aggregated multinomial probability vector, which indicates the future traffic density.

Further, in some embodiments, service robots may be deployed in the environment, based on the estimated future traffic density. For example, the environment may be an indoor space including multiple cabins. The service robots may be deployed to one or more cabins of the multiple cabins, based on the estimated future traffic density in the one or more cabins. Additionally or alternatively, in some embodiments, the environment is an outdoor space including multiple roads and a traffic light at a junction of the multiple roads. The traffic light may be controlled based on the estimated future traffic density in the environment.

Accordingly, one embodiment discloses a system for estimating a future traffic density in an environment according to appended claim 1.

Accordingly, another embodiment discloses a method for estimating a future traffic density in an environment according to appended claim 7.

Accordingly, yet another embodiment discloses a non-transitory computer-readable storage medium according to appended claim 13.

[Brief Description of Drawings]

[FIG. 1A]

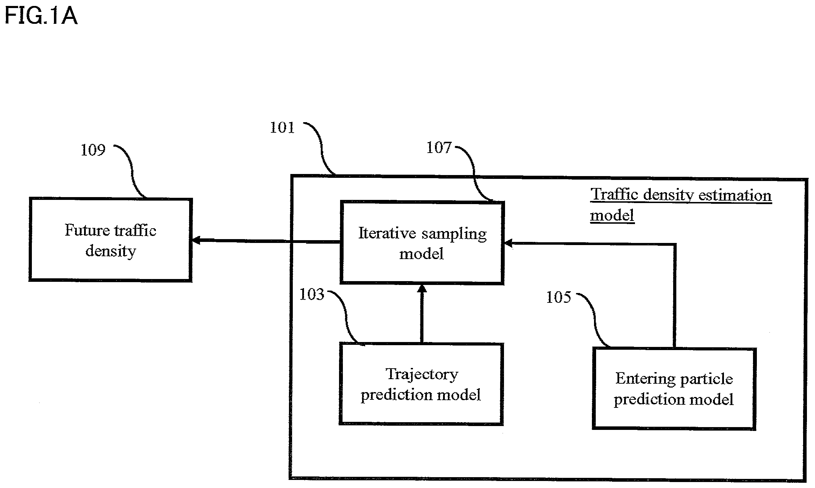

FIG. 1A illustrates a block diagram of a traffic density estimation model for estimating a future traffic density, according to an embodiment of the present disclosure.
[FIG. 1B]

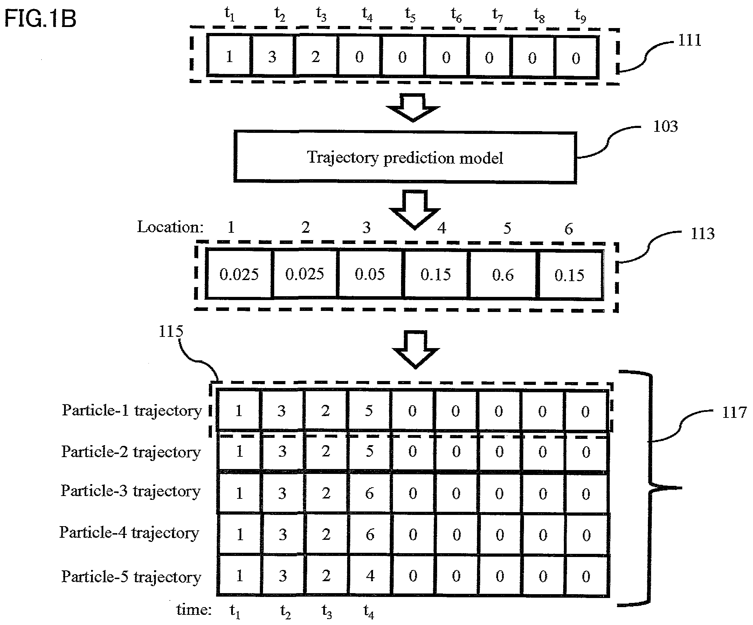

FIG. 1B illustrates a schematic diagram of a trajectory prediction model that accounts for movements of existing objects by predicting trajectories of the existing objects, according to an embodiment of the present disclosure.
[FIG. 1C]

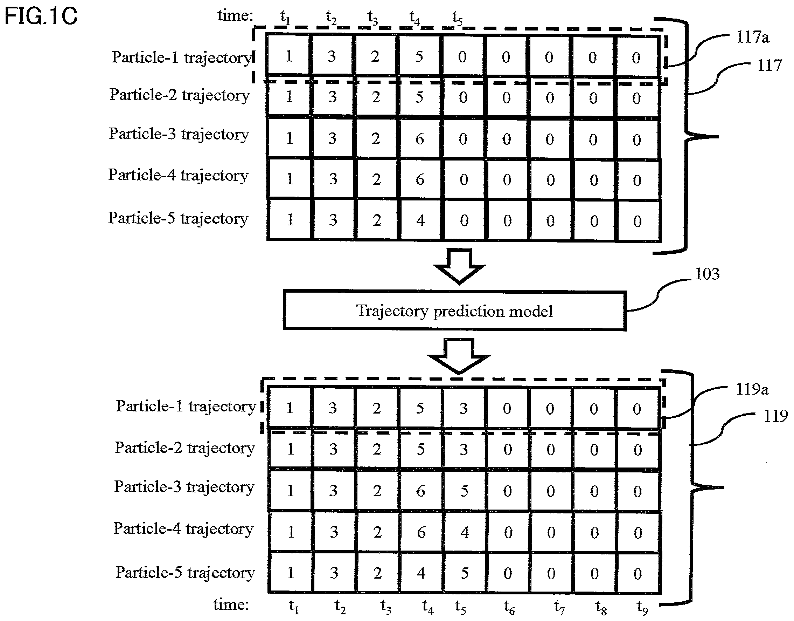

FIG. 1C illustrates prediction of a location of each particle at a next time instant, according to an embodiment of the present disclosure.

[FIG. 1D]

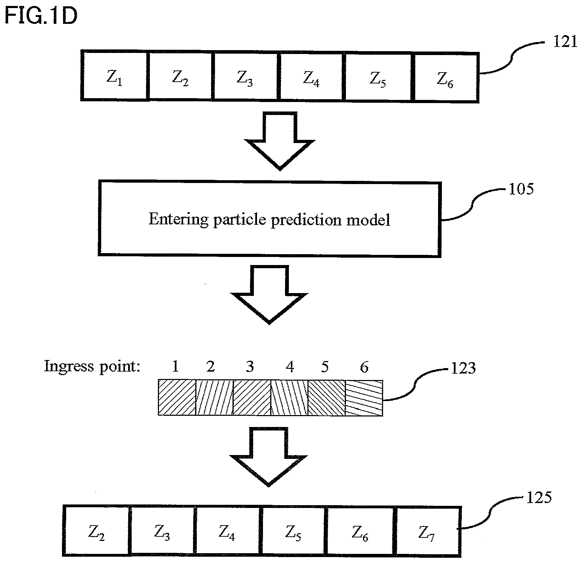

FIG. 1D illustrates a schematic for predicting entering particles using an entering particle prediction model, according to an embodiment of the present disclosure.
[FIG. 1E]

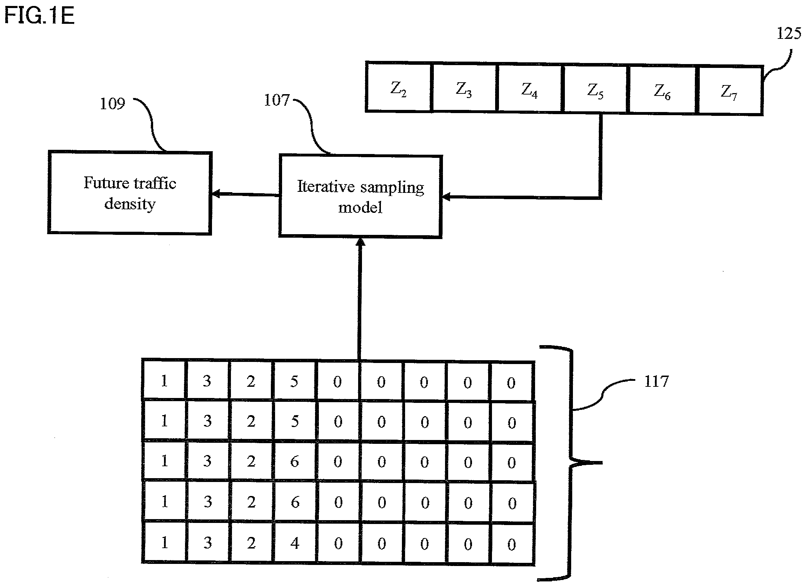

FIG. 1E illustrates estimation of the future traffic density, according to an embodiment of the present disclosure.
[FIG. 1F]

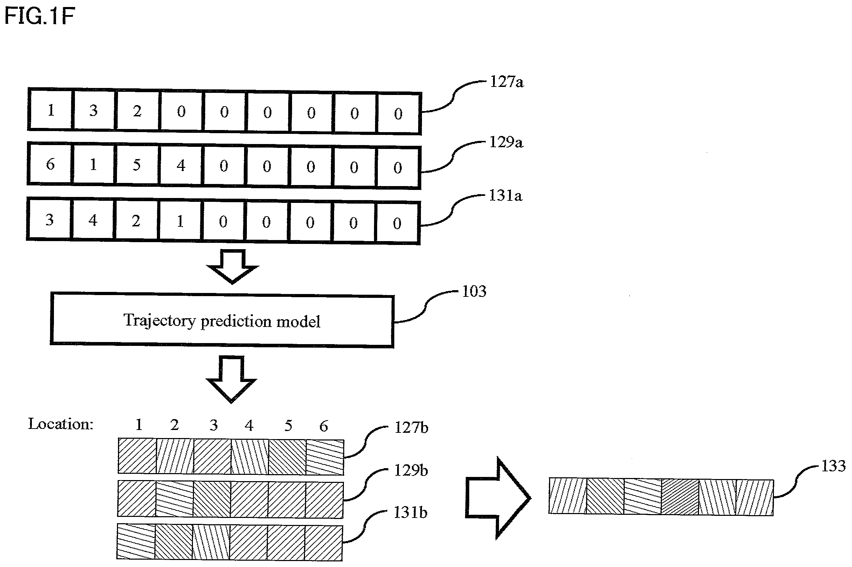

FIG. 1F illustrates a schematic for determining an aggregated multinomial probability vector, according to an embodiment of the present disclosure.
[FIG. 1G]

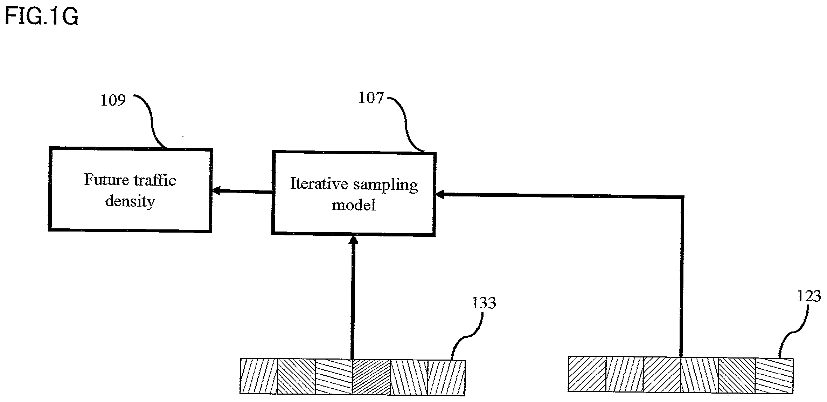

FIG. 1G illustrates estimation of the future traffic density based on the aggregated multinomial probability vector and a multinomial probability vector, according to an embodiment of the present disclosure.
[FIG. 2]

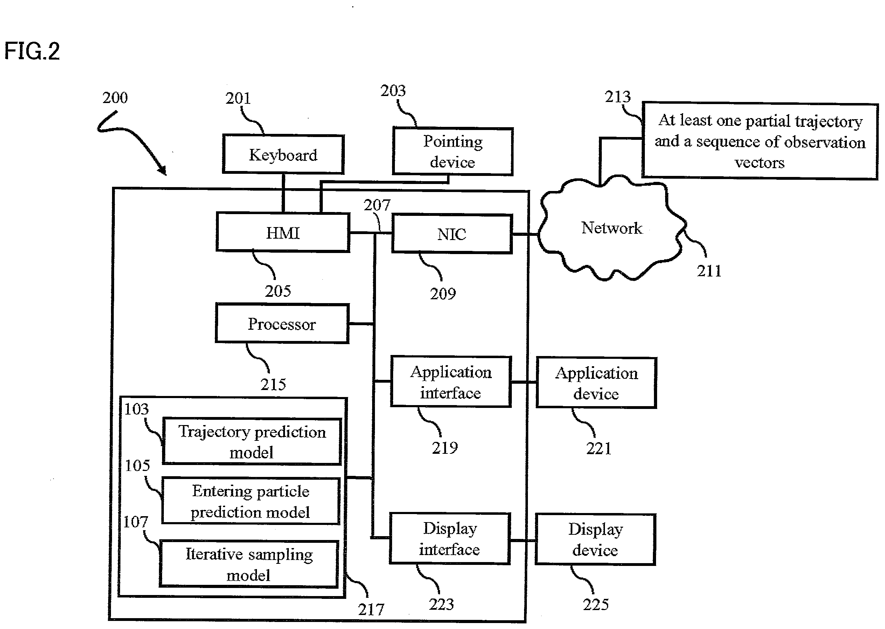

FIG. 2 illustrates a block diagram of a system for estimating the future traffic density, according to an embodiment of the present disclosure.
[FIG. 3]

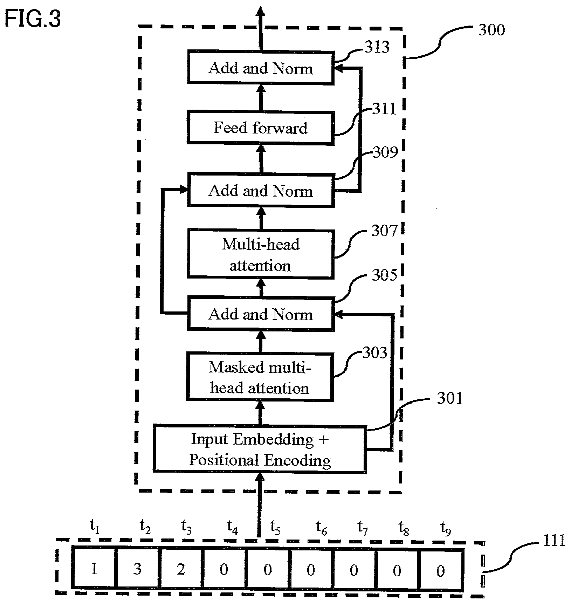

FIG. 3 illustrates a block diagram of an architecture of a transformer decoder of the trajectory prediction model, according to an embodiment of the present disclosure.
[FIG. 4]

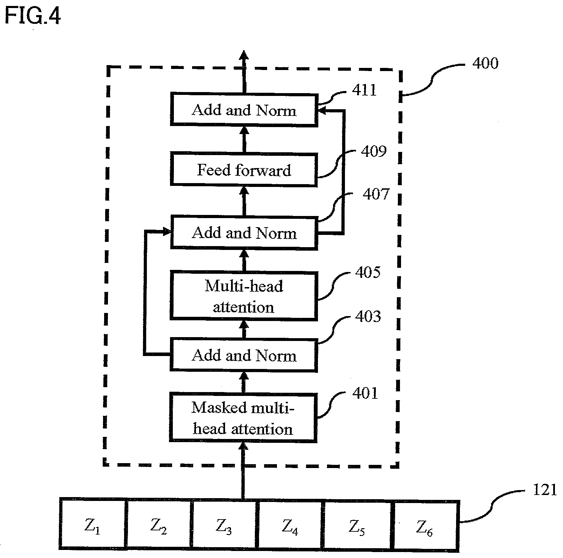

FIG. 4 illustrates a block diagram of an architecture of a transformer decoder of the entering particle prediction model, according to an embodiment of the present disclosure.
[FIG. 5]

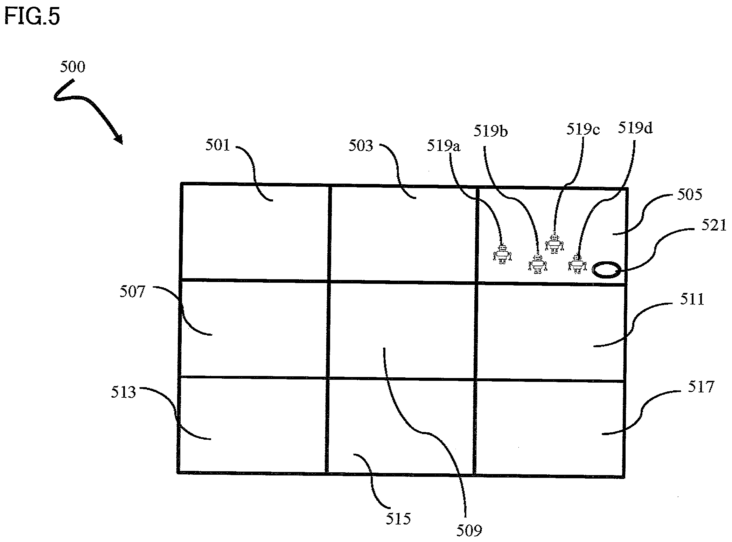

FIG. 5 illustrates deployment of service robots in an indoor space, based on the estimated future traffic density, according to an embodiment of the present disclosure.
[FIG. 6]

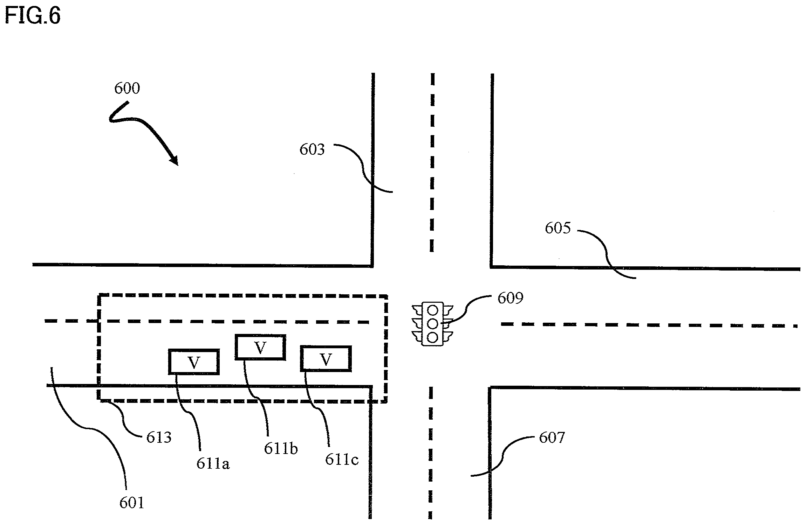

FIG. 6 illustrates controlling of a traffic light in an outdoor space, according to an embodiment of the present disclosure.
[FIG. 7A]

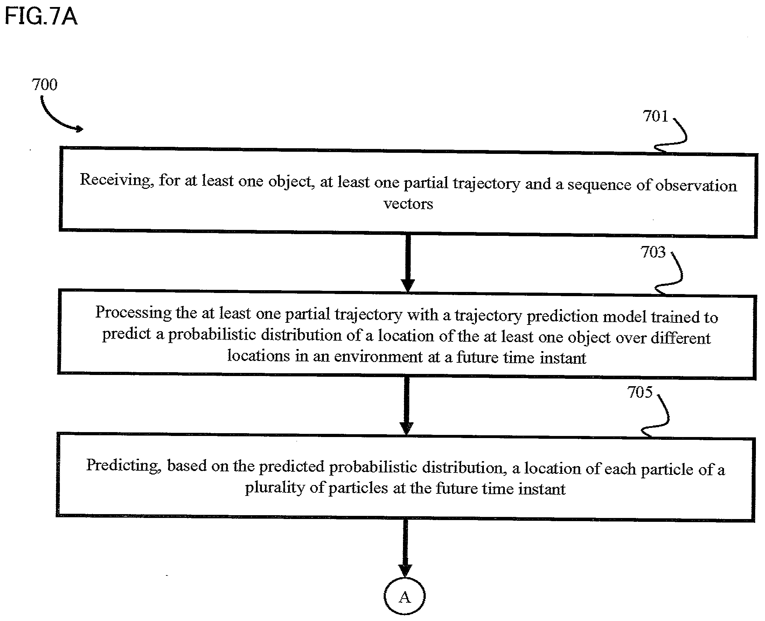

FIG. 7A shows a first part of a block diagram of a method for estimating a future traffic density in an environment, according to an embodiment of the present disclosure.
[FIG. 7B]

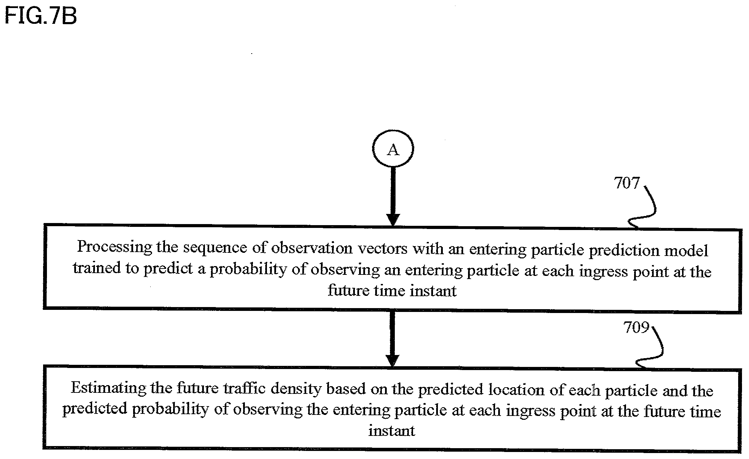

FIG. 7B shows a second part of a block diagram of a method for estimating a future traffic density in an environment, according to an embodiment of the present disclosure.
[FIG. 8]

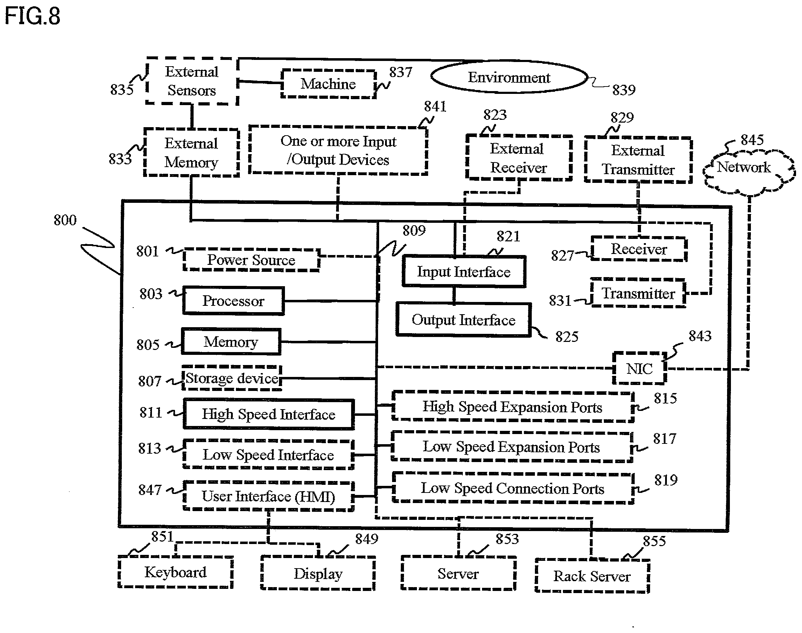

FIG. 8 shows a schematic diagram of a computing device that can be used for implementing the system and the method of the present disclosure.

[Description of Embodiments]

The presently disclosed embodiments will be further explained with reference to the attached drawings. The drawings shown are not necessarily to scale, with emphasis instead generally being placed upon illustrating the principles of the presently disclosed embodiments.

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

It is an object of some embodiments to estimate a future traffic density in an environment. The environment may be an indoor space (for example, an office space) or an outdoor space (for example, an area of a city including roads). The environment includes multiple ingress points and egress points. The present disclosure provides a traffic density estimation model for estimating the future traffic density in the environment.

FIG. 1A shows a block diagram of a traffic density estimation model 101 for estimating a future traffic density 109, according to an embodiment of the present disclosure. The traffic density estimation model 101 includes a trajectory prediction model 103, an entering particle prediction model 105, and an iterative sampling model 107. Some embodiments are based on the recognition that the traffic density in the environment depends on movements of objects (e.g., persons) existing in the environment at a given time. The trajectory prediction model 103 accounts for the movements of the existing objects by predicting trajectories of the existing objects, as described below with reference to FIG. 1B.

FIG. 1B illustrates a schematic diagram of operation of the trajectory prediction model 103 that accounts for the movements of the existing objects by predicting trajectories of the existing objects, according to an embodiment of the present disclosure. A partial trajectory 111 of an object is applied as an input to the trajectory prediction model 103. The object is moving from an ingress point of the multiple ingress points to an egress point of the multiple egress points in the environment. The partial trajectory 111 is represented by a location sequence [1,3,2,0,0,0,0,0,0,0] of length nine at different time instants, such as time instants - $t_1$, $t_2$, $t_3$, $t_4$, $t_5$, $t_6$, $t_7$, $t_8$, $t_9$ respectively. For the purpose of explanation, it is assumed that there are six different locations (1-6) in total in the environment. The partial trajectory 111 depicts that a location of the object in the environment at time instant t1 is 1, the location of the object in the environment at time instant $t_2$ is 3, and the location of the object in the environment at time instant $t_3$ is 2. Such a partial trajectory is input to the trajectory prediction model 103 to predict the location of the object at next time instant $t_4$ (also referred to as future time instant).

At a first prediction step, the partial trajectory 111 is input to the trajectory prediction model 103 and the trajectory prediction model 103 outputs a probability distribution 113 of object's location over the six locations (1-6). The probability distribution 113 indicates a probability of the object being at each of the six locations (1-6) at time instant $t_4$. For example, the probability distribution 113 indicates that the probability of the object being at location 5 at the time instant $t_4$ is 0.6.

Some embodiments are based on the realization that the object may be represented by a number of particles, e.g., five particles, and each particle is treated independently. The number of particles may be specified by a user. Each particle may follow a different trajectory. To that end, a location of each particle at the time instant $t_4$ is to be predicted. To predict the location of each particle at the time instant $t_4$, a location is sampled from the probability distribution 113 and the sampled location is appended to the trajectory of the particle. For instance, for a trajectory 115 of particle-1, the location of the particle-1 at the time instant $t_4$ is predicted to be 5 by sampling the probability distribution 113. Likewise, for each particle's trajectory, the location at the time instant $t_4$ is predicted to determine updated trajectories 117 corresponding to the five particles.

Further, at a second prediction step, the updated trajectories 117 are used to predict the location of each particle at time instant $t_5$, as described below with reference to FIG. 1C.

FIG. 1C illustrates prediction of the location of each particle at time instant $t_5$, according to an embodiment of the present disclosure. The updated trajectories 117 corresponding to the five particles are input to the trajectory prediction model 103 and the trajectory prediction model 103 outputs a probability distribution (like the probability distribution 113) for each particle. The location of each particle is sampled from the corresponding the probability distribution and the sample location is appended to the corresponding trajectory. For instance, an updated trajectory 117a of the particle-1 is input to the trajectory prediction model 103 and the trajectory prediction model 103 outputs a probability distribution of the particle-1's location over the six locations (1-6). A location is sampled from the probability distribution of the particle-1's location and the sampled location (e.g., location 3) is appended to the updated trajectory 117a of the particle-1 to determine a new updated trajectory 119a of the particle-1. Likewise, the location of other particles at the time instant $t_5$ is predicted to determine new updated trajectories 119.

Similarly, the new updated trajectories 119 are further used to predict the location of each particle at time instant $t_6$, in a third prediction step. In such a manner, the location of each particle is iteratively predicted till the location is predicted for time instant $t_9$ to complete the trajectory.

Some embodiments are based on the realization that, for the environment with constant entering and exiting objects, the traffic density estimation model 101 should account for objects that may initiate new trajectories at the ingress points at the next time instant, to accurately estimate the future traffic density. In other words, entering particles are to be predicted to accurately estimate the future traffic density. The traffic density estimation model 101 includes the entering particle prediction model 105 for predicting the entering particles. The entering particle model 105 is explained below with reference to FIG. 1D.

FIG. 1D illustrates a schematic for predicting the entering particles using the entering particle prediction model 105, according to an embodiment of the present disclosure. A sequence of observation vectors $\{z_i \in [0,1]^m\}_{i=1}^{T}$ 121 is input to the entering particle prediction model 105. Each element of the observation vector 121 is a binary variable with 1 indicating there is an entering particle and 0 for no observation. For example, the sequence of observation vectors 121 may be obtained from cameras installed in the environment. At time $i = 2$, the object (e.g., person) started to move from location 3 and was captured by the camera, then $z_2[3] = 1$ and all other entries of $z_2$ (a vector) are zero. The entering particle prediction model 105 outputs a multinomial probability vector 123. The multinomial probability vector 123 indicates a probability of observing an entering particle at each of the ingress points at the next time instant. For the purpose of explanation, a number of the ingress points is considered to be six (1-6). Each shade in the multinomial probability vector 123 depicts a different probability. Further, based on the multinomial probability vector 123, a next observation vector z7 is predicted and appended to the sequence 121 of observation vectors to determine an updated sequence 125 of observation vectors.

Based on the updated trajectories 117 and the updated sequence 125 of observation vectors, the future traffic density 109 for the next time instant may be estimated as explained below with reference to FIG. 1E.

FIG. 1E illustrates estimation of the future traffic density 109, according to an embodiment of the present disclosure. The updated trajectories 117 and the updated sequence 125 of observation vectors are input to the iterative sampling model 107. Based on the updated trajectories 117 and the updated sequence 125 of observation vectors, the iterative sampling model 107 estimates the future traffic density 109 for the next time instant.

In some embodiments, the multiple partial trajectories (such as the partial trajectory 111) of different objects are input to the trajectory prediction model 103. For example, as shown in FIG. 1F, multiple trajectories, such as a partial trajectory 127a of object-1, a partial trajectory 129a of object-2, and a partial trajectory 131a of object-3 are input to the trajectory prediction model 103, at the first prediction step. The trajectory prediction model 103 outputs a probability distribution 127b of object-1's location over the six locations (1-6) at the next time instant, a probability distribution 129b of object-2's location over the six locations at the next time instant, and a probability distribution 131b of object-3's location over the six locations at the next time instant. Further, the probability distribution 127b, the probability distribution 129b, and the probability distribution 131b are averaged to determine an aggregated multinomial probability vector 133. The aggregated multinomial probability vector 133 indicates final predicted probabilities of the object's location over the six locations.

Further, based on the aggregated multinomial probability vector 133 and the multinomial probability vector 123, the iterative sampling model 107 estimates the future traffic density 109 for the next time instant, as explained below with reference to FIG. 1G.

FIG. 1G illustrates the estimation of the future traffic density 109 based on the aggregated multinomial probability vector 133 and the multinomial probability vector 123, according to an embodiment of the present disclosure. The multinomial probability vector 123 and the aggregated multinomial probability vector 133 are input to the iterative sampling model 107. Based on the multinomial probability vector 123 and the aggregated multinomial probability vector 133, the iterative sampling model 107 estimates the future traffic density 109 for the next time instant. In particular, the iterative sampling model 107 outputs samples of future objects from an averaged vector of the multinomial probability vector 123 and the aggregated multinomial probability vector 133, which indicates the future traffic density. The averaged vector may be mathematically given as

$$p[j] = \frac{\sum_{i=1}^{n} \hat{x}_i [j] + \hat{z}[j]}{|\sum_{i=1}^{n} \hat{x}_i + \hat{z}|}, \quad j \in [1, \ldots, m],$$

where $\{\hat{x}_i \in \mathbb{R}^m\}_{i=1}^{n}$ represent the probability distribution 127b, the probability distribution 129b, and the probability distribution 131b, and $\hat{z}$ is the multinomial probability vector 123.

Some embodiments of the present disclosure provide a system for estimation of the future traffic density 109 based on the trajectory prediction model 103, the entering particle prediction model 105, and the iterative sampling model 107. Such a system is described below in FIG. 2.

FIG. 2 shows a block diagram of a system 200 for estimating the future traffic density 109 in the environment, according to an embodiment of the present disclosure. The system 200 includes a Network Interface Controller (NIC) 209 adapted to connect the system 200 through a bus 207 to a network 211 (also referred to as communication channel). Through the network 211, either wirelessly or through wires, the system 200 receives, for at least one object, at least one partial trajectory and a sequence of observation vectors 213. The at least one object is moving from an ingress point of the multiple ingress points to an egress point of the multiple egress points in the environment. The at least one object is represented by the plurality of particles.

Further, in some implementations, a Human Machine Interface (HMI) 205 within the system 200 connects the system 200 to a keyboard 201 and a pointing device 203. The pointing device 203 may include a mouse, trackball, touchpad, joystick, pointing stick, stylus, or touchscreen, among others. Further, the system 200 includes an application interface 219 to connect the system 200 to an application device 221 for performing various operations. Additionally, the system 200 may be linked through the bus 207 to a display interface 223 adapted to connect the system 200 to a display device 225, such as a computer monitor, television, projector, or mobile device, among others.

The system 200 further includes a processor 215 and a memory 217 that stores instructions that are executable by the processor 215. The processor 215 may be a single core processor, a multi-core processor, a computing cluster, or any number of other configurations. The memory 217 may include random access memory (RAM), read only memory (ROM), flash memory, or any other suitable memory system. The memory 217 is configured to store the trajectory prediction model 103, the entering particle prediction model 105, and the iterative sampling model 107.

The processor 215 is configured to process the at least one partial trajectory with the trajectory prediction model 103 trained to predict a probabilistic distribution (e.g., the probabilistic distribution 113) of a location of the at least one object over different locations in the environment at a future time instant. The processor 215 is further configured to predict, based on the predicted probabilistic distribution, a location of each particle of the plurality of particles at the future time instant. The processor 215 is further configured to process the sequence of observation vectors with the entering particle prediction model 105 trained to predict a probability of observing an entering particle at each ingress point at the future time instant. The processor 215 is further configured to estimate, using the iterative sampling model 107, the future traffic density 109 for the future time instant based on the predicted location of each particle and the predicted probability of observing the entering particle at each ingress point at the future time instant.

In some implementations, the trajectory prediction model 103 includes a stack of transformer decoders. Each transformer decoder includes multiple layers as described below with reference to FIG. 3.

FIG. 3 illustrates a block diagram of an architecture of a transformer decoder 300 of the trajectory prediction model 103, according to an embodiment of the present disclosure. The transformer decoder 300 includes an input embedding and positional encoding layer 301, a masked multi-head attention layer 303, a first add and norm layer 305, a multi-head attention layer 307, a second add and norm layer 309, a feed forward layer 311, and a third add and norm layer 313. The partial trajectory 111 is input to the embedding and positional encoding layer 301.

The input embedding and positional encoding layer 301 is configured to produce a high dimensional representation of the partial trajectory 111. For example, the input embedding and positional encoding layer 301 is configured to process an input sequence (i.e., the partial trajectory 111). The input embedding layer takes the input sequence and maps each location to a high-dimensional vector representation. Such embedding allows the trajectory prediction model 103 to model meaning of the input sequence in a continuous, vector space, which can capture complex relationships between locations in the trajectories. Unlike a recurrent neural network, which can process input sequences sequentially and naturally capture positional information, a transformer processes the entire input sequence in parallel, which means it needs a way to encode relative position of each location in the input sequence. Positional encoding solves such a problem by adding a positional encoding vector to each embedding, which encodes the position of each location in the input sequence. Positional encoding vectors are learned during training and are designed to capture the relative position of each location in the input sequence in a way that is compatible with attention mechanism used in the transformer.

The masked multi-head attention layer 303 is configured to ensure that the trajectory prediction model 103 predicts the object's location based on observed locations in the input sequence by selectively focusing on different parts of the input sequence when processing the input sequence. For example, at first, the input sequence is split into multiple "heads," each of which can attend to different parts of the input sequence. Next, a "query" vector is created for each position in the input sequence. The query vector represents information that the trajectory prediction model 103 is trying to extract from that position. The masked multi-head attention layer 303 then computes a "score" for each position in the input sequence based on how well its query vector matches up with the other positions in the input sequence. The computed score reflects how important each position is to the trajectory prediction model's current task. Finally, the trajectory prediction model 103 uses the computed scores to weight the input sequence, effectively amplifying the important parts of the input sequence while ignoring irrelevant parts. The "masking" part of the masked multi-head attention layer 303 comes in when dealing with sequences that have variable lengths. Specifically, the masked multi-head attention layer 303 applies a mask to the scores to ensure that the trajectory prediction model 103 only attends to positions in the input sequence that have already been processed, and not to any future positions.

The first add and norm layer 305 is configured to add outputs of the input embedding and positional encoding layer 301, and the masked multi-head attention layer 303, and normalize a resulting sum. The add and norm layer consists of two parts: an element-wise summation operation (the "Add" part) and a layer normalization operation (the "Norm" part). For instance, the output from the masked multi-head attention layer 303 is added to input of the first add and norm layer 305. Such an operation is performed element-wise, meaning that each element in two tensors is added together. Resulting tensor is then normalized using layer normalization. The layer normalization is a technique for normalizing values in a tensor across feature dimension (the last dimension in the tensor). Specifically, for each feature dimension, mean and standard deviation of the values are computed, and the values are then shifted and scaled to have zero mean and unit variance. Such normalization helps the trajectory prediction model 103 better deal with vanishing and exploding gradients during training, and can improve performance.

The multi-head attention layer 307 is configured to calculate multiple attention functions with different learned projections. For instance, the multi-head attention layer 307 is configured to allow the trajectory prediction model 103 to attend to different parts of the input sequence in parallel, and then combine information from these different "heads" to produce a final output. For example, at first, an input sequence (i.e., output sequence from the first add and norm layer 305) is transformed into three vectors: a query vector Q, a key vector K, and a value vector V. The three vectors are computed using learned linear transformations. Next, the three vectors are split into multiple "heads," each of which can attend to different parts of the input sequence. Specifically, each head applies its own linear transformation to the query, key, and value vectors, producing a set of "projected" vectors for that head. The attention mechanism is then applied separately to each head. For each head, the multi-head attention layer 307 computes a "score" vector, which represents how well each position in the input sequence matches up with the query vector. The score vector is computed using a dot product between the query vector and the key vector for that position. The score vector is then normalized using a softmax function to produce a set of attention weights, which indicate how much each position in the input sequence should be attended to by that head. Finally, the value vectors for each head are weighted by corresponding attention weights and combined to produce a single output vector for that head. The output vectors are concatenated together to form the final output of the multi-head attention layer 307.

The second add and norm layer 309 is configured to add and normalize the normalized sum outputted by the first add and norm layer 305 and the multiple attention functions outputted by the multi-head attention layer 307.

The feed forward layer 311 is a type of fully connected neural network that is configured to transform a normalized output of the second add and norm layer 309 using a linear transformation. The fully connected neural network includes two linear transformations, separated by a non-linear activation function. A first linear transformation projects an input tensor onto a higher-dimensional space. An activation function applies a non-linear transformation to an output of the first linear transformation. Such transformations allow the trajectory prediction model 103 to capture complex patterns and relationships in the input tensor. A second linear transformation maps the output of the activation function back down to original dimensionality of the input tensor.

The third add and norm layer 313 is configured to add and normalize the normalized output from the second add and norm layer 309 and the transformed normalized output of the feed forward layer 311.

In an embodiment, the trajectory prediction model 103 is trained with a cross-entropy loss function. For example, the trajectory prediction model 103 is trained on a training dataset including samples of preprocessed partial trajectories of multiple people. Each partial trajectory is fed to the trajectory prediction model 103 and the trajectory prediction model 103 predicts a next location of the corresponding person. The cross-entropy loss function calculates a negative logarithm of a predicted of a predicted location of the at least one object for a true next destination, and loss function is then averaged over all the samples in the training dataset, giving a single value that the trajectory prediction model tries to minimize during training.

Further, in some implementations, the entering particle prediction model 105 includes a stack of transformer decoders. Each transformer decoder includes multiple layers as described below with reference to FIG. 4.

FIG. 4 illustrates a block diagram of an architecture of a transformer decoder 400 of the entering particle prediction model 105, according to an embodiment of the present disclosure. The transformer decoder 400 includes a masked multi-head attention layer 401, a first add and norm layer 403, a multi-head attention layer 405, a second add and norm layer 407, a feed forward layer 409, and a third add and norm layer 411.

The masked multi-head attention layer 401 is configured to ensure that the entering particle prediction model 105 predicts an entering particle based on observed locations in the sequence 121 of observation vectors. For instance, the masked multi-head attention layer 401 is configured to selectively focus on different parts of an input sequence (e.g., the sequence 121 of observation vectors) when processing the input sequence. For example, at first, the input sequence is split into multiple "heads," each of which can attend to different parts of the input sequence. Next, a "query" vector is created for each position in the input sequence. The query vector represents information that the entering particle prediction model 105 is trying to extract from that position. The masked multi-head attention layer 401 then computes a "score" for each position in the input sequence based on how well its query vector matches up with the other positions in the input sequence. The computed score reflects how important each position is to the trajectory prediction model's current task. Finally, the entering particle prediction model 105 uses the computed scores to weight the input sequence, effectively amplifying the important parts of the input sequence while ignoring irrelevant parts. The "masking" part of the masked multi-head attention layer 401 comes in when dealing with sequences that have variable lengths. Specifically, the masked multi-head attention layer 401 applies a mask to the scores to ensure that the entering particle prediction model 105 only attends to positions in the input sequence that have already been processed, and not to any future positions.

The first add and norm layer 403 is configured to add outputs of the masked multi-head attention layer 401, and normalize a resulting sum. The add and norm layer consists of two parts: an element-wise summation operation (the "Add" part) and a layer normalization operation (the "Norm" part). For instance, the output from the masked multi-head attention layer 401 is added to input of the first add and norm layer 403. Such an operation is performed element-wise, meaning that each element in two tensors is added together. Resulting tensor is then normalized using layer normalization. The layer normalization is a technique for normalizing values in a tensor across feature dimension (the last dimension in the tensor). Specifically, for each feature dimension, mean and standard deviation of the values are computed, and the values are then shifted and scaled to have zero mean and unit variance. Such normalization helps the entering particle prediction model 105 better deal with vanishing and exploding gradients during training, and can improve performance.

The multi-head attention layer 405 is configured to calculate multiple attention functions with different learned projections. For instance, the multi-head attention layer 405 is configured to allow the entering particle prediction model 105 to attend to different parts of the input sequence in parallel, and then combine information from these different "heads" to produce a final output. For example, at first, an input sequence (i.e., output sequence from the first add and norm layer 403) is transformed into three vectors: a query vector Q, a key vector K, and a value vector V. The three vectors are computed using learned linear transformations. Next, the three vectors are split into multiple "heads," each of which can attend to different parts of the input sequence. Specifically, each head applies its own linear transformation to the query, key, and value vectors, producing a set of "projected" vectors for that head. The attention mechanism is then applied separately to each head. For each head, the multi-head attention layer 307 computes a "score" vector, which represents how well each position in the input sequence matches up with the query vector. The score vector is computed using a dot product between the query vector and the key vector for that position. The score vector is then normalized using a softmax function to produce a set of attention weights, which indicate how much each position in the input sequence should be attended to by that head. Finally, the value vectors for each head are weighted by corresponding attention weights and combined to produce a single output vector for that head. The output vectors are concatenated together to form the final output of the multi-head attention layer 405.

The second add and norm layer 407 is configured to add and normalize the normalized sum outputted by the first add and norm layer 403 and the multiple attention functions outputted by the multi-head attention layer 405.

The feed forward layer 409 is a type of fully connected neural network that is configured to transform a normalized output of the second add and norm layer 407 using a linear transformation. The fully connected neural network includes two linear transformations, separated by a non-linear activation function. A first linear transformation projects an input tensor onto a higher-dimensional space. An activation function applies a non-linear transformation to an output of the first linear transformation. Such transformations allow the entering particle prediction model 105 to capture complex patterns and relationships in the input tensor. A second linear transformation maps the output of the activation function back down to original dimensionality of the input tensor.

The third add and norm layer 411 is configured to add and normalize the normalized output of the second add and norm layer 407 and the transformed normalized output of the feed forward layer 409.

In an embodiment, the entering particle prediction model 105 is trained with a mean-squared-error loss function. For example, the entering particle prediction model 105 is trained on a training dataset including samples of observation vectors obtained from cameras. Each sample is applied to the entering particle prediction model 105 and the entering particle prediction model 105 predicts a corresponding entering particle. The mean-squared-error loss function computes an average of squared differences between the predicted entering particles and corresponding true values.

Some embodiments are based on the realization that the system 200 may be used to deploy service robots in the environment, based on the estimated future traffic density 109. The service robots assist human beings, typically by performing a job that is dirty, dull, distant, or repetitive. For example, the environment may be an indoor space including multiple cabins. The processor 215 is configured to deploy the service robots to at least one cabin of the multiple cabins, based on an estimate of future traffic density in the at least one cabin. Such an embodiment is described below in FIG. 5.

FIG. 5 illustrates deployment of the service robots in an indoor space 500, according to an embodiment of the present disclosure. The indoor space 500 may be an office space or a floor of a building that includes multiple cabins, such as a cabin 501, a cabin 503, a cabin 505, a cabin 507, a cabin 509, a cabin 511, a cabin 513, a cabin 515, and a cabin 517. A number of service robots to be deployed to a cabin is based on a future traffic density in the cabin. For example, for the cabin 505, the future traffic density at time instant t = 3 is estimated to be 16 people/cabin. Using a scaling factor, e.g., 0.25, the number of service robots to be deployed to the cabin 505 is determined as $0.25 \times 16 = 4$. To that end, the processor 215 deploys four service robots, such as a service robot 519a, a service robot 519b, a service robot 519c, and a service robot 519d, to the cabin 505.

In some embodiments, if the number of service robots already deployed to the cabin 505 exceeds the number of service robots corresponding to the estimated future traffic density, then redundant service robots are called back, e.g., the redundant service robots are moved back to a service scheduling region 521. For instance, if the number of service robots to be deployed in the cabin 505 is four, but five service robots are already present in the cabin 505, then the processor 125 moves back one of the five service robots to the service scheduling region 521.

Deploying the service robots based on the future traffic density in such a manner, minimizes contact between the service robots and people in the environment, thus improving efficiency and reducing costs of the service robots' operation.

Additionally or alternatively, in some embodiments, the environment is an outdoor space including multiple roads and a traffic light at a junction of the multiple roads. The traffic light may be controlled based on the estimated future traffic density in the environment, as described below in FIG. 6.

FIG. 6 illustrates controlling of a traffic light in an outdoor space 600, according to an embodiment of the present disclosure. The outdoor space 600 may be an area of a city including multiple roads, such as a road 601, a road 603, a road 605, and a road 607. Further, the outdoor space 600 includes a traffic light 609 at a junction of the multiple roads. The traffic light 609 is communicatively coupled to the system 200. Vehicles, such as a vehicle 611a, a vehicle 611b, and a vehicle 611c, are moving on the road 601. The vehicles may be autonomous vehicles or manual driven vehicles. The system 200 estimates future traffic density in a region 613. Based on the estimated future traffic density, the processor 215 controls the traffic light 609. For instance, based on the estimated future traffic density, the processor 215 may control a duration of a red traffic light and/or a duration of a green traffic light such that waiting period of the vehicles at the traffic light 609 is minimized.

Further, an overall method for estimating the future traffic density in the environment (indoor space or outdoor space) is described below with reference to FIGs. 7A and 7B.

FIGs. 7A and 7B show a block diagram of a method 700 for estimating the future traffic density in the environment, according to an embodiment of the present disclosure. At block 701, the method 700 includes receiving, for at least one object, at least one partial trajectory (such as the partial trajectory 111) and a sequence of observation vectors (such as the sequence of observation vectors 121). The at least one object is moving from an ingress point of the multiple ingress points to an egress point of the multiple egress points in the environment. The at least one object is represented by a plurality of particles.

At block 703, the method 700 includes processing the at least one partial trajectory with a trajectory prediction model (i.e., the trajectory prediction model 103) trained to predict a probabilistic distribution (e.g., probabilistic distribution 113) of a location of the at least one object over different locations in the environment at a future time instant. At block 705, the method 700 includes predicting, based on the predicted probabilistic distribution, a location of each particle of the plurality of particles at the future time instant. To predict, based on the predicted probabilistic distribution, the location of each particle of the plurality of particles at the future time instant, a location of each particle is sampled from the predicted probabilistic distribution.

At block 707, the method 700 includes processing the sequence of observation vectors (e.g., the processing the sequence of observation vectors 121 ) with an entering particle prediction model (e.g., the entering particle prediction model 105) trained to predict a probability of observing an entering particle at each ingress point at the future time instant. In particular, the entering particle prediction model outputs a multinomial probability vector (e.g., the multinomial probability vector 123) which indicates a probability of observing an entering particle at each of the ingress points at the future time instant.

At block 709, the method 700 includes estimating the future traffic density for the future time instant based on the predicted location of each particle and the predicted probability of observing the entering particle at each ingress point at the future time instant.

FIG. 8 shows a schematic diagram of a computing device that can be used for implementing the system 200 and the method 700 of the present disclosure. The computing device 800 includes a power source 801, a processor 803, a memory 805, a storage device 807, all connected to a bus 809. Further, a high-speed interface 811, a low-speed interface 813, high-speed expansion ports 815 and low speed connection ports 817, can be connected to the bus 809. In addition, a low-speed expansion port 819 is in connection with the bus 809. Further, an input interface 821 can be connected via the bus 809 to an external receiver 823 and an output interface 825. A receiver 827 can be connected to an external transmitter 829 and a transmitter 831 via the bus 809. Also connected to the bus 809 can be an external memory 833, external sensors 835, machine(s) 837, and an environment 839. Further, one or more external input/output devices 841 can be connected to the bus 809. A network interface controller (NIC) 843 can be adapted to connect through the bus 809 to a network 845, wherein data or other data, among other things, can be rendered on a third-party display device, third party imaging device, and/or third-party printing device outside of the computing device 800.

The memory 805 can store instructions that are executable by the computing device 800 and any data that can be utilized by the methods and systems of the present disclosure. The memory 805 can include random access memory (RAM), read only memory (ROM), flash memory, or any other suitable memory systems. The memory 805 can be a volatile memory unit or units, and/or a non-volatile memory unit or units. The memory 805 may also be another form of computer-readable medium, such as a magnetic or optical disk.

The storage device 807 can be adapted to store supplementary data and/or software modules used by the computer device 800. The storage device 807 can include a hard drive, an optical drive, a thumb-drive, an array of drives, or any combinations thereof. Further, the storage device 807 can contain a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, the processor 803), perform one or more methods, such as those described above.

The computing device 800 can be linked through the bus 809, optionally, to a display interface or user Interface (HMI) 847 adapted to connect the computing device 800 to a display device 849 and a keyboard 851, wherein the display device 849 can include a computer monitor, camera, television, projector, or mobile device, among others. In some implementations, the computer device 800 may include a printer interface to connect to a printing device, wherein the printing device can include a liquid inkjet printer, solid ink printer, large-scale commercial printer, thermal printer, UV printer, or dye-sublimation printer, among others.

The high-speed interface 811 manages bandwidth-intensive operations for the computing device 800, while the low-speed interface 813 manages lower bandwidth-intensive operations. Such allocation of functions is an example only. In some implementations, the high-speed interface 811 can be coupled to the memory 805, the user interface (HMI) 848, and to the keyboard 851 and the display 849 (e.g., through a graphics processor or accelerator), and to the high-speed expansion ports 815, which may accept various expansion cards via the bus 809. In an implementation, the low-speed interface 813 is coupled to the storage device 807 and the low-speed expansion ports 817, via the bus 809. The low-speed expansion ports 817, which may include various communication ports (e.g., USB, Bluetooth, Ethernet, wireless Ethernet) may be coupled to the one or more input/output devices 841. The computing device 800 may be connected to a server 853 and a rack server 855. The computing device 800 may be implemented in several different forms. For example, the computing device 800 may be implemented as part of the rack server 855.

The description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the scope of the invention which is defined by the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments.

Further, embodiments of the present disclosure and the functional operations described in this specification can be implemented in digital electronic circuitry, in tangibly-embodied computer software or firmware, in computer hardware, including the structures disclosed in this specification and their structural equivalents, or in combinations of one or more of them. Further some embodiments of the present disclosure can be implemented as one or more computer programs, i.e., one or more modules of computer program instructions encoded on a tangible non transitory program carrier for execution by, or to control the operation of, data processing apparatus. Further still, program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

According to embodiments of the present disclosure the term "data processing apparatus" can encompass all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

A computer program can be deployed to be executed on one computer or on multiple computers that are located at one site or distributed across multiple sites and interconnected by a communication network. Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data.

Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Although the present disclosure has been described with reference to certain preferred embodiments, it is to be understood that various other adaptations and modifications can be made within the scope of the invention which is defined by the appended claims.

**Claims**

1.   A system (200) for estimating a future traffic density (109) in an environment, wherein the environment includes multiple ingress points and multiple egress points, the system (200) comprising: at least one processor (215); and a memory (217) having instructions stored thereon that cause the at least one processor (215) of the system (200) to:

receive, for at least one object, at least one partial trajectory (111) and a sequence of observation vectors (121), wherein the at least one object is moving from an ingress point of the multiple ingress points to an egress point of the multiple egress points, and wherein the at least one object is represented by a plurality of particles;
process:

(1) the at least one partial trajectory (111) with a trajectory prediction model (103) trained to predict a probabilistic distribution (113) of a location of the at least one object over different locations in the environment at a future time instant (t4); and
predict, based on the predicted probabilistic distribution (113), a location of each particle of the plurality of particles at the future time instant (t4); and
(2) the sequence of observation vectors (121) with an entering particle prediction model (105) trained to predict a probability of observing an entering particle at each ingress point at the future time instant (t4); and

estimate the future traffic density (109) for the future time instant (t4) with an iterative sampling model (107) based on the predicted location of each particle and the predicted probability of observing the entering particle at each ingress point at the future time instant (t4),

wherein at least one of the following a) -b) is provided:

a) wherein the environment is an indoor space (500) including multiple cabins (501-517), and wherein the at least one processor (215) is further configured to deploy at least one service robot (519a-d) to at least one cabin of the multiple cabins (501-517), based on the estimated future traffic density (109) in the environment; or wherein the environment is an outdoor space (600) including multiple roads (601-607) and a traffic light (609) at a junction of the multiple roads (601-607), and wherein the at least one processor (215) is further configured to control the traffic light (609) based on the estimated future traffic density (109) in the environment; b) wherein the sequence of observation vectors (121) is obtained from cameras installed in the environment.

2. The system (200) of claim 1, wherein, to predict, based on the predicted probabilistic distribution (113), the location of each particle of the plurality of particles at the future time instant (t4), the at least one processor (215) is further configured to sample a location of each particle from the predicted probabilistic distribution (113).

3. The system (200) of claim 1, wherein the trajectory prediction model (103) includes a stack of transformer decoders, and wherein each transformer decoder (300) includes:

an input embedding and positional encoding layer (301) configured to produce a high dimensional representation of the at least one partial trajectory (111); a masked multi-head attention layer (303) configured to ensure that the trajectory prediction model (103) predicts the object's location based on observed locations in the at least one partial trajectory (111); a first add and norm layer (305) configured to add outputs of the input embedding and positional encoding layer (301), and the masked multi-head attention layer (303), and normalize a resulting sum; a multi-head attention layer (307) configured to calculate multiple attention functions with different learned projections; a second add and norm layer (309) configured to add and normalize the normalized sum outputted by the first add and norm layer (305) and the multiple attention functions outputted by the multi-head attention layer (307); a feed forward layer (311) configured to transform a normalized output of the second add and norm layer (309), using a linear transformation; and a third add and norm layer (313) configured to add and normalize the normalized output of the second add and norm layer (309) and the transformed normalized output of the feed forward layer (311).

4. The system (200) of claim 1, wherein the entering particle prediction model (105) includes a stack of transformer decoders, and wherein each transformer decoder (400) includes:

a masked multi-head attention layer (401) configured to ensure that the entering particle prediction model (105) predicts an entering particle based on observed locations the sequence of observation vectors (121); a first add and norm layer (403) configured to add outputs of the masked multi-head attention layer (401), and normalize a resulting sum; a multi-head attention layer (405) configured to calculate multiple attention functions with different learned projections; a second add and norm layer (407) configured to add and normalize the normalized sum outputted by the first add and norm layer (403) and the multiple attention functions outputted by the multi-head attention layer (405); a feed forward layer (409) configured to transform a normalized output of the second add and norm layer (407), using a linear transformation; and a third add and norm layer (411) configured to add and normalize the normalized output of the second add and norm layer (407) and the transformed normalized output of the feed forward layer (409).

5. The system (200) of claim 1, wherein the trajectory prediction model (103) is trained with a cross-entropy loss function, and wherein the cross-entropy loss function computes a negative logarithm of a predicted location of the at least one object for a true next destination.

6. The system (200) of claim 1, wherein the entering particle prediction model (105) is trained with a mean-squared-error loss function, and wherein the mean-squared-error loss function computes an average of squared differences between predicted entering particles and corresponding true values.

7. A computer-implemented method for estimating a future traffic density (109) in an environment, wherein the environment includes multiple ingress points and multiple egress points, the method comprising:

receiving, for at least one object, at least one partial trajectory (111) and a sequence of observation vectors (121), wherein the at least one object is moving from an ingress point of the multiple ingress points to an egress point of the multiple egress points, and wherein the at least one object is represented by a plurality of particles;
processing:

(1) the at least one partial trajectory (111) with a trajectory prediction model (103) trained to predict a probabilistic distribution (113) of a location of the at least one object over different locations in the environment at a future time instant (t4); and
predicting, based on the predicted probabilistic distribution (113), a location of each particle of the plurality of particles at the future time instant (t4); and
(2) the sequence of observation vectors (121) with an entering particle prediction model (105) trained to predict a probability of observing an entering particle at each ingress point at the future time instant (t4); and

estimating the future traffic density (109) for the future time instant (t4) with an iterative sampling model (107) based on the predicted location of each particle and the predicted probability of observing the entering particle at each ingress point at the future time instant (t4),

wherein at least one of the following a) -b) is provided:

a) wherein the environment is an indoor space (500) including multiple cabins (501-517), and wherein the at least one processor (215) is further configured to deploy at least one service robot (519a-d) to at least one cabin of the multiple cabins (501-517), based on the estimated future traffic density (109) in the environment; or
wherein the environment is an outdoor space (600) including multiple roads (601-607) and a traffic light (609) at a junction of the multiple roads (601-607), and wherein the at least one processor (215) is further configured to control the traffic light (609) based on the estimated future traffic density (109) in the environment;
b) wherein the sequence of observation vectors (121) is obtained from cameras installed in the environment.

8. The method of claim 7, wherein, to predict, based on the predicted probabilistic distribution (113), the location of each particle of the plurality of particles at the future time instant (t4), the method further comprises sampling a location of each particle from the predicted probabilistic distribution (113).

9. The method of claim 7, wherein the trajectory prediction model (103) includes a stack of transformer decoders, and wherein each transformer decoder (300) includes:

an input embedding and positional encoding layer (301) configured to produce a high dimensional representation of the at least one partial trajectory (111);
a masked multi-head attention layer (303) configured to ensure that the trajectory prediction model (103) predicts the object's location based on observed locations in the at least one partial trajectory (111);
a first add and norm layer (305) configured to add outputs of the input embedding and positional encoding layer (301), and the masked multi-head attention layer (303), and normalize a resulting sum;
a multi-head attention layer (307) configured to calculate multiple attention functions with different learned projections;
a second add and norm layer (309) configured to add and normalize the normalized sum outputted by the first add and norm layer (305) and the multiple attention functions outputted by the multi-head attention layer (307);
a feed forward layer (311) configured to transform a normalized output of the second add and norm layer (309), using a linear transformation; and
a third add and norm layer (313) configured to add and normalize the normalized output of the second add and norm layer (309) and the transformed normalized output of the feed forward layer (311); or

10. The method of claim 7, wherein the entering particle prediction model (105) includes a stack of transformer decoders, and wherein each transformer decoder (400) includes:

a masked multi-head attention layer (401) configured to ensure that the entering particle prediction model (105) predicts an entering particle based on observed locations the sequence of observation vectors (121);

a first add and norm layer (403) configured to add outputs of the masked multi-head attention layer (401), and normalize a resulting sum;

a multi-head attention layer (405) configured to calculate multiple attention functions with different learned projections;

a second add and norm layer (407) configured to add and normalize the normalized sum outputted by the first add and norm layer (403) and the multiple attention functions outputted by the multi-head attention layer (405);

a feed forward layer (409) configured to transform a normalized output of the second add and norm layer (407), using a linear transformation; and

a third add and norm layer (411) configured to add and normalize the normalized output of the second add and norm layer (407) and the transformed normalized output of the feed forward layer (409).

11. The method of claim 7, wherein the trajectory prediction model (103) is trained with a cross-entropy loss function, and wherein the cross-entropy loss function computes a negative logarithm of a predicted location of the at least one object for a true next destination.

12. The method of claim 7, wherein the entering particle prediction model (105) is trained with a mean-squared-error loss function, and wherein the mean-squared-error loss function computes an average of squared differences between predicted entering particles and corresponding true values.

13. A non-transitory computer-readable storage medium embodied thereon a program that when executed by a processor (215), causes the processor to perform a method for estimating a future traffic density (109) in an environment, wherein the environment includes multiple ingress points and multiple egress points, the method comprising:

receiving, for at least one object, at least one partial trajectory (111) and a sequence of observation vectors (121), wherein the at least one object is moving from an ingress point of the multiple ingress points to an egress point of the multiple egress points, and wherein the at least one object is represented by a plurality of particles;

processing:

(1) the at least one partial trajectory (111) with a trajectory prediction model (103) trained to predict a probabilistic distribution (113) of a location of the at least one object over different locations in the environment at a future time instant (t4); and

predicting, based on the predicted probabilistic distribution (113), a location of each particle of the plurality of particles at the future time instant (t4); and

(2) the sequence of observation vectors (121) with an entering particle prediction model (105) trained to predict a probability of observing an entering particle at each ingress point at the future time instant (t4); and

estimating the future traffic density (109) for the future time instant (t4) with an iterative sampling model (107) based on the predicted location of each particle and the predicted probability of observing the entering particle at each ingress point at the future time instant (t4),

wherein at least one of the following a) -b) is provided:

a) wherein the environment is an indoor space (500) including multiple cabins (501-517), and wherein the at least one processor (215) is further configured to deploy at least one service robot (519a-d) to at least one cabin of the multiple cabins (501-517), based on the estimated future traffic density (109) in the environment; or

wherein the environment is an outdoor space (600) including multiple roads (601-607) and a traffic light (609) at a junction of the multiple roads (601-607), and wherein the at least one processor (215) is further configured to control the traffic light (609) based on the estimated future traffic density (109) in the environment;

b) wherein the sequence of observation vectors (121) is obtained from cameras installed in the environment.

14. The non-transitory computer-readable storage medium of claim 13, wherein, to predict, based on the predicted probabilistic distribution (113), the location of each particle of the plurality of particles at the future time instant (t4), the method further comprises sampling a location of each particle from the predicted probabilistic distribution (113).

**Patentansprüche**

1. System (200) zum Ermitteln einer zukünftigen Verkehrsdichte (109) in einer Umgebung, wobei die Umgebung mehrere Eintrittspunkte und mehrere Austrittspunkte umfasst, wobei das System (200) umfasst: mindestens einen Prozessor (215); und einen Speicher (217) mit darauf gespeicherten Anweisungen, die den mindestens einen Prozessor (215) des Systems (200) dazu veranlassen:

   für mindestens ein Objekt mindestens eine Teiltrajektorie (111) und eine Sequenz von Beobachtungsvektoren (121) zu empfangen, wobei sich das mindestens eine Objekt von einem Eintrittspunkt der mehreren Eintrittspunkte zu einem Austrittspunkt der mehreren Austrittspunkte bewegt, und wobei das mindestens eine Objekt durch eine Vielzahl von Partikeln dargestellt wird;
   folgendes zu verabeiten: die mindestens eine Teiltrajektorie (111) mit einem Trajektorie-Vorhersagemodell (103) z, das trainiert wurde, eine probabilistische Verteilung (113) einer Position des mindestens einen Objekts über verschiedene Positionen in der Umgebung zu einem zukünftigen Zeitpunkt (t4) vorherzusagen; und

   (1) auf der Grundlage der vorhergesagten probabilistischen Verteilung (113), eine Position jedes Partikels der Vielzahl von Partikeln zu dem zukünftigen Zeitpunkt (t4) vorherzusagen; und
   (2) die Sequenz von Beobachtungsvektoren (121) mit einem Vorhersagemodell für eintretende Partikel (105), das trainiert wurde, eine Wahrscheinlichkeit für die Beobachtung eines eintretenden Partikels an jedem Eintrittspunkt zu dem zukünftigen Zeitpunkt (t4) vorherzusagen; und

   die zukünftige Verkehrsdichte (109) für den zukünftigen Zeitpunkt (t4) mit einem iterativen Sampling-Modell (107) auf der Grundlage der vorhergesagten Position jedes Partikels und der vorhergesagten Wahrscheinlichkeit der Beobachtung des eintretenden Partikels an jedem Eintrittspunkt zu dem zukünftigen Zeitpunkt (t4) zu schätzen, wobei zumindest eines der Folgenden a) - b) bereitgestellt ist:

   a) wobei die Umgebung ein Innenraum (500) ist, der mehrere Kabinen (501-517) enthält, und wobei der mindestens eine Prozessor (215) ferner eingerichtet ist, mindestens einen Serviceroboter (519a-d) für mindestens eine Kabine der mehreren Kabinen (501-517) einzusetzen, auf der Grundlage der geschätzten zukünftigen Verkehrsdichte (109) in der Umgebung; oder wobei die Umgebung ein Außenraum (600) ist, der mehrere Straßen (601-607) und eine Lichtsignalanlage (609) an einer Kreuzung der mehreren Straßen (601-607) enthält, und wobei der mindestens eine Prozessor (215) ferner eingerichtet ist, die Lichtsignalanlage (609) auf der Grundlage der ermittelten zukünftigen Verkehrsdichte (109) in der Umgebung zu steuern;
   b) wobei die Sequenz von Beobachtungsvektoren (121) von in der Umgebung installierten Kameras erhalten wird.

2. System (200) nach Anspruch 1, wobei, um auf der Grundlage der vorhergesagten probabilistischen Verteilung (113) die Position jedes Partikels der Vielzahl von Partikeln zu dem zukünftigen Zeitpunkt (t4) vorherzusagen, der mindestens eine Prozessor (215) ferner eingerichtet ist, eine Position jedes Partikels aus der vorhergesagten probabilistischen Verteilung (113) zu sampeln.

3. System (200) nach Anspruch 1, wobei das Trajektorie-Vorhersagemodell (103) einen Stapel von Transformator-Dekodierern enthält, und wobei jeder Transformator-Dekodierer (300) enthält:

   eine Eingangseinbettungs- und Positionskodierungsschicht (301), die eingerichtet ist, eine hochdimensionale Darstellung der mindestens einen Teiltrajektorie (111) zu erzeugen;
   eine maskierte Multi-Head-Attention-Schicht (303), die eingerichtet ist, sicherzustellen, dass das Trajektorie-Vorhersagemodell (103) die Position des Objekts auf der Grundlage von beobachteten Positionen in der mindestens einen Teiltrajektorie (111) vorhersagt;
   eine erste Additions- und Normalisierungsschicht (305), die eingerichtet ist, Ausgaben der Eingangseinbettungs- und Positionskodierungsschicht (301) und der maskierten Multi-Head-Attention-Schicht (303) zu addieren, und eine resultierende Summe zu normalisieren;
   eine Multi-Head-Attention-Schicht (307), die eingerichtet ist, mehrere Attention-Funktionen mit unterschiedlichen gelernten Projektionen zu berechnen;
   eine zweite Additions- und Normalisierungsschicht (309), die eingerichtet ist, die normalisierte Summe, welche von der ersten Additions- und Normalisierungsschicht (305) ausgegeben wird, und den mehreren Attention-Funktionen, welche von der Multi-Head-Attention-Schicht (307) ausgegeben werden, zu addieren und zu normalisieren;

eine Feed-Forward-Schicht (311), die eingerichtet ist, eine normalisierte Ausgabe der zweiten Additions- und Normalisierungsschicht (309) unter Verwendung einer linearen Transformation zu transformieren; und

eine dritte Additions- und Normalisierungsschicht (313), die eingerichtet ist, die normalisierte Ausgabe der zweiten Additions- und Normalisierungsschicht (309) und der transformierten normalisierten Ausgabe der Feed-Forward-Schicht (311) zu addieren und zu normalisieren.

4. System (200) nach Anspruch 1, wobei das Vorhersagemodell für eintretende Partikel (105) einen Stapel von Transformator-Dekodieren enthält, und wobei jeder Transformator-Dekodierer (400) enthält:

eine maskierte Multi-Head-Attention-Schicht (401), die eingerichtet ist, sicherzustellen, dass das Partikel-Vorhersagemodell (105) ein eintretendes Partikel auf der Grundlage von beobachteten Positionen der Sequenz von Beobachtungsvektoren (121) vorhersagt;

eine erste Additions- und Normalisierungsschicht (403), die eingerichtet ist, Ausgaben der maskierten Multi-Head-Attention-Schicht (401) zu addieren und eine resultierende Summe zu normalisieren;

eine Multi-Head-Attention-Schicht (405), die eingerichtet ist, mehrere Attention-Funktionen mit unterschiedlichen gelernten Projektionen zu berechnen;

eine zweite Additions- und Normalisierungsschicht (407), die eingerichtet ist, die normalisierte Summe, welche von der ersten Additions- und Normalisierungsschicht (403) ausgegeben wird, und die mehreren Attention-Funktionen, welche von der Multi-Head-Attention-Schicht (405) ausgegeben werden, zu addieren und zu normalisieren;

eine Feed-Forward-Schicht (409), die eingerichtet ist, eine normalisierte Ausgabe der zweiten Additions- und Normalisierungsschicht (407) unter Verwendung einer linearen Transformation zu transformieren; und

eine dritte Additions- und Normierungsschicht (411), die eingerichtet ist, die normalisierte Ausgabe der zweiten Additions- und Normalisierungsschicht (407) und die transformierte normalisierte Ausgabe der Feed-Forward-Schicht (409) zu addieren und zu normalisieren.

5. System (200) nach Anspruch 1, wobei das Trajektorie-Vorhersagemodell (103) mit einer Kreuzentropie-Verlustfunktion trainiert wird, und wobei die Kreuzentropie-Verlustfunktion einen negativen Logarithmus einer vorhergesagten Position des mindestens einen Objekts für ein wahres nächstes Ziel berechnet.

6. System (200) nach Anspruch 1, wobei das Vorhersagemodell für eintretende Partikel (105) mit einer Verlustfunktion des mittleren quadratischen Fehlers trainiert wird, und wobei die Verlustfunktion des mittleren quadratischen Fehlers einen Durchschnitt der quadratischen Differenzen zwischen vorhergesagten eintretenden Partikeln und korrespondierenden wahren Werten berechnet.

7. Computerimplementiertes Verfahren des Ermittelns einer zukünftigen Verkehrsdichte (109) in einer Umgebung, wobei die Umgebung mehrere Eintrittspunkte und mehrere Austrittspunkte umfasst, wobei das Verfahren umfasst:

Empfangen, für mindestens ein Objekt, mindestens einer Teiltrajektorie (111) und einer Sequenz von Beobachtungsvektoren (121), wobei sich das mindestens eine Objekt von einem Eintrittspunkt der mehreren Eintrittspunkte zu einem Austrittspunkt der mehreren Austrittspunkte bewegt, und wobei das mindestens eine Objekt durch eine Vielzahl von Partikeln dargestellt wird;

Verarbeiten:

(1) der mindestens einen Teiltrajektorie (111) mit einem Trajektorie-Vorhersagemodell (103), das trainiert wurde, um eine probabilistische Verteilung (113) einer Position des mindestens einen Objekts über verschiedene Positionen in der Umgebung zu einem zukünftigen Zeitpunkt (t4) vorherzusagen; und

Vorhersagen, auf der Grundlage der vorhergesagten probabilistischen Verteilung (113), einer Position jedes Partikels der Vielzahl von Partikeln zu dem zukünftigen Zeitpunkt (t4); und

(2) der Sequenz von Beobachtungsvektoren (121) mit einem Vorhersagemodell für eintretende Partikel (105), das trainiert wurde, eine Wahrscheinlichkeit für die Beobachtung eines eintretenden Partikels an jedem Eintrittspunkt zu dem zukünftigen Zeitpunkt (t4) vorherzusagen; und

Ermitteln der zukünftigen Verkehrsdichte (109) für den zukünftigen Zeitpunkt (t4) mit einem iterativen Sampling-Modell (107) auf der Grundlage der vorhergesagten Position jedes Partikels und der vorhergesagten Wahrscheinlichkeit der Beobachtung des eintretenden Partikels an jedem Eintrittspunkt zu dem zukünftigen Zeitpunkt (t4),

wobei zumindest eines der Folgenden a) - b) bereitgestellt ist:

a) wobei die Umgebung ein Innenraum (500) ist, der mehrere Kabinen (501-517) enthält, und wobei der mindestens eine Prozessor (215) ferner eingerichtet ist, mindestens einen Serviceroboter (519a-d) für mindestens eine Kabine der mehreren Kabinen (501-517) einzusetzen, auf der Grundlage der ermittelten zukünftigen Verkehrsdichte (109) in der Umgebung; oder

wobei die Umgebung ein Außenraum (600) ist, der mehrere Straßen (601-607) und eine Lichtsignalanlage (609) an einer Kreuzung der mehreren Straßen (601-607) enthält, und wobei der mindestens eine Prozessor (215) ferner eingerichtet ist, die Lichtsignalanlage (609) auf der Grundlage der ermittelten zukünftigen Verkehrsdichte (109) in der Umgebung zu steuern;

b) wobei die Sequenz von Beobachtungsvektoren (121) von in der Umgebung installierten Kameras erhalten wird.

8. Verfahren nach Anspruch 7, wobei, um auf der Grundlage der vorhergesagten probabilistischen Verteilung (113) die Position jedes Partikels der Vielzahl von Partikeln zu dem zukünftigen Zeitpunkt (t4) vorherzusagen, das Verfahren ferner ein Sampeln einer Position jedes Partikels aus der vorhergesagten probabilistischen Verteilung (113) umfasst.

9. Verfahren nach Anspruch 7, wobei das Trajektorie-Vorhersagemodell (103) einen Stapel von Transformator-Dekodierern enthält, und wobei jeder Transformator-Dekodierer (300) enthält:

eine Eingangseinbettungs- und Positionskodierungsschicht (301), die eingerichtet ist, eine hochdimensionale Darstellung der mindestens einen Teiltrajektorie (111) zu erzeugen;

eine maskierte Multi-Head-Attention-Schicht (303), die eingerichtet ist, sicherzustellen, dass das Trajektorie-Vorhersagemodell (103) die Position des Objekts auf der Grundlage von beobachteten Positionen in der mindestens einen Teiltrajektorie (111) vorhersagt;

eine erste Additions- und Normalisierungsschicht (305), die eingerichtet ist, Ausgaben der Eingangseinbettungs- und Positionskodierungsschicht (301) und der maskierten Multi-Head-Attention-Schicht (303) zu addieren, und eine resultierende Summe zu normalisieren;

eine Multi-Head-Attention-Schicht (307), die eingerichtet ist, mehrere Attention-Funktionen mit unterschiedlichen gelernten Projektionen zu berechnen;

eine zweite Additions- und Normalisierungsschicht (309), die eingerichtet ist, die normalisierte Summe, welche von der ersten Additions- und Normalisierungsschicht (305) ausgegeben wird, und den mehreren Attention-Funktionen, welche von der Multi-Head-Attention-Schicht (307) ausgegeben werden, zu addieren und zu normalisieren;

eine Feed-Forward-Schicht (311), die eingerichtet ist, eine normalisierte Ausgabe der zweiten Additions- und Normalisierungsschicht (309) unter Verwendung einer linearen Transformation zu transformieren; und

eine dritte Additions- und Normierungsschicht (313), die eingerichtet ist, die normalisierte Ausgabe der zweiten Additions- und Normalisierungsschicht (309) und der transformierten normalisierten Ausgabe der Feed-Forward-Schicht (311) zu addieren und zu normalisieren; oder

10. Verfahren nach Anspruch 7, wobei das Vorhersagemodell für eintretende Partikel (105) einen Stapel von Transformator-Dekodieren enthält, und wobei jeder Transformator-Dekodierer (400) enthält:

eine maskierte Multi-Head-Attention-Schicht (401), die eingerichtet ist, sicherzustellen, dass das Partikel-Vorhersagemodell (105) ein eintretendes Partikel auf der Grundlage von beobachteten Positionen der Sequenz von Beobachtungsvektoren (121) vorhersagt;

eine erste Additions- und Normalisierungsschicht (403), die eingerichtet ist, Ausgaben der maskierten Multi-Head-Attention-Schicht (401) zu addieren und eine resultierende Summe zu normalisieren;

eine Multi-Head-Attention-Schicht (405), die eingerichtet ist, mehrere Attention-Funktionen mit unterschiedlichen gelernten Projektionen zu berechnen;

eine zweite Additions- und Normalisierungsschicht (407), die eingerichtet ist, die normalisierte Summe, welche von der ersten Additions- und Normalisierungsschicht (403) ausgegeben wird, und die mehreren Attention-Funktionen, welche von der Multi-Head-Attention-Schicht (405) ausgegeben werden, zu addieren und zu normalisieren;

eine Feed-Forward-Schicht (409), die konfiguriert ist, eine normalisierte Ausgabe der zweiten Additions- und Normalisierungsschicht (407) unter Verwendung einer linearen Transformation zu transformieren; und

eine dritte Additions- und Normierungsschicht (411), die eingerichtet ist, die normalisierte Ausgabe der zweiten Additions- und Normalisierungsschicht (407) und die transformierte normalisierte Ausgabe der Feed-Forward-Schicht (409) zu addieren und zu normalisieren.

11. Verfahren nach Anspruch 7, wobei das Trajektorie-Vorhersagemodell (103) mit einer Kreuzentropie-Verlustfunktion trainiert wird, und wobei die Kreuzentropie-Verlustfunktion einen negativen Logarithmus einer vorhergesagten Position des mindestens einen Objekts für ein wahres nächstes Ziel berechnet.

12. Verfahren nach Anspruch 7, wobei das Vorhersagemodell für eintretende Partikel (105) mit einer Verlustfunktion des mittleren quadratischen Fehlers trainiert wird, und wobei die Verlustfunktion des mittleren quadratischen Fehlers einen Durchschnitt der quadratischen Differenzen zwischen vorhergesagten eintretenden Partikeln und korrespondierenden wahren Werten berechnet.

13. Nichttransitorisches computerlesbares Speichermedium, auf dem ein Programm verkörpert ist, das, wenn es von einem Prozessor (215) ausgeführt wird, den Prozessor veranlasst, ein Verfahren durchzuführen zum:
Ermitteln einer zukünftigen Verkehrsdichte (109) in einer Umgebung, wobei die Umgebung mehrere Eintrittspunkte und mehrere Austrittspunkte umfasst, wobei das Verfahren umfasst:

Empfangen, für mindestens ein Objekt, mindestens einer Teiltrajektorie (111) und einer Sequenz von Beobachtungsvektoren (121), wobei sich das mindestens eine Objekt von einem Eintrittspunkt der mehreren Eintrittspunkte zu einem Austrittspunkt der mehreren Austrittspunkte bewegt, und wobei das mindestens eine Objekt durch eine Vielzahl von Partikeln dargestellt wird;
Verarbeiten:

(1) der mindestens einen Teiltrajektorie (111) mit einem Trajektorie-Vorhersagemodell (103), das trainiert wurde, um eine probabilistische Verteilung (113) einer Position des mindestens einen Objekts über verschiedene Positionen in der Umgebung zu einem zukünftigen Zeitpunkt (t4) vorherzusagen; und

Vorhersagen, auf der Grundlage der vorhergesagten probabilistischen Verteilung (113), einer Position jedes Partikels der Vielzahl von Partikeln zu dem zukünftigen Zeitpunkt (t4); und
(2) der Sequenz von Beobachtungsvektoren (121) mit einem Vorhersagemodell für eintretende Partikel (105), das trainiert wurde, eine Wahrscheinlichkeit für die Beobachtung eines eintretenden Partikels an jedem Eintrittspunkt zu dem zukünftigen Zeitpunkt (t4) vorherzusagen; und
Ermitteln der zukünftigen Verkehrsdichte (109) für den zukünftigen Zeitpunkt (t4) mit einem iterativen Sampling-Modell (107) auf der Grundlage der vorhergesagten Position jedes Partikels und der vorhergesagten Wahrscheinlichkeit der Beobachtung des eintretenden Partikels an jedem Eintrittspunkt zu dem zukünftigen Zeitpunkt (t4),
wobei zumindest eines der folgenden a) - b) bereitgestellt ist:

a) wobei die Umgebung ein Innenraum (500) ist, der mehrere Kabinen (501-517) enthält, und wobei der mindestens eine Prozessor (215) ferner eingerichtet ist, mindestens einen Serviceroboter (519a-d) für mindestens eine Kabine der mehreren Kabinen (501-517) einzusetzen, auf der Grundlage der ermittelten zukünftigen Verkehrsdichte (109) in der Umgebung; oder

wobei die Umgebung ein Außenraum (600) ist, der mehrere Straßen (601-607) und eine Lichtsignalanlage (609) an einer Kreuzung der mehreren Straßen (601-607) enthält, und wobei der mindestens eine Prozessor (215) ferner eingerichtet ist, die Lichtsignalanlage (609) auf der Grundlage der ermittelten zukünftigen Verkehrsdichte (109) in der Umgebung zu steuern;
b) wobei die Sequenz von Beobachtungsvektoren (121) von in der Umgebung installierten Kameras erhalten wird.

14. Nichttransitorisches computerlesbares Speichermedium nach Anspruch 13, wobei, um auf der Grundlage der vorhergesagten probabilistischen Verteilung (113) die Position jedes Partikels der Vielzahl von Partikeln zu dem zukünftigen Zeitpunkt (t4) vorherzusagen, das Verfahren ferner ein Sampeln einer Position jedes Partikels aus der vorhergesagten probabilistischen Verteilung (113) umfasst.

**Revendications**

1. Système (200) pour estimer une densité de trafic future (109) dans un environnement, dans lequel l'environnement inclut de multiples points d'entrée et de multiples points de sortie, le système (200) comprenant : au moins un processeur (215) ; et une mémoire (217) sur laquelle sont stockées des instructions qui amènent le au moins un processeur (215) du système (200) à :

recevoir, pour au moins un objet, au moins une trajectoire partielle (111) et une séquence de vecteurs d'observation (121), dans lequel le au moins un objet se déplace d'un point d'entrée des multiples points d'entrée à un point de sortie des multiples points de sortie, et dans lequel le au moins un objet est représenté par une pluralité de particules ;
traiter :

(1) la au moins une trajectoire partielle (111) avec un modèle de prédiction de trajectoire (103) formé pour prédire une distribution probabiliste (113) d'un emplacement du au moins un objet sur différents emplacements dans l'environnement à un instant futur (t4) ; et

prédire, sur la base de la distribution probabiliste prédite (113), un emplacement de chaque particule de la pluralité de particules à l'instant futur (t4) ; et
(2) la séquence de vecteurs d'observation (121) avec un modèle de prédiction de particule entrante (105) formé pour prédire une probabilité d'observer une particule entrante à chaque point d'entrée à l'instant futur (t4) ; et estimer la densité de trafic future (109) pour l'instant futur (t4) avec un modèle d'échantillonnage itératif (107) basé sur l'emplacement prédit de chaque particule et la probabilité prédite d'observer la particule entrante à chaque point d'entrée à l'instant futur (t4),
dans lequel au moins l'un des points a) à b) suivants est prévu :

a) dans lequel l'environnement est un espace intérieur (500) incluant de multiples cabines (501-517), et dans lequel le au moins un processeur (215) est en outre configuré pour déployer au moins un robot de service (519a-d) vers au moins une cabine des multiples cabines (501-517), sur la base de la densité de trafic future estimée (109) dans l'environnement ; ou dans lequel l'environnement est un espace extérieur (600) incluant de multiples routes (601-607) et un feu de trafic (609) à une jonction des multiples routes (601-607), et dans lequel le au moins un processeur (215) est en outre configuré pour commander le feu de trafic (609) sur la base de la densité de trafic future estimée (109) dans l'environnement ;
b) dans lequel la séquence de vecteurs d'observation (121) est obtenue à partir de caméras installées dans l'environnement.

2. Système (200) selon la revendication 1, dans lequel, pour prédire, sur la base de la distribution probabiliste prédite (113), l'emplacement de chaque particule de la pluralité de particules à l'instant futur (t4), le au moins un processeur (215) est en outre configuré pour échantillonner un emplacement de chaque particule à partir de la distribution probabiliste prédite (113).

3. Système (200) selon la revendication 1, dans lequel le modèle de prédiction de trajectoire (103) inclut une pile de décodeurs de transformateur, et dans lequel chaque décodeur de transformateur (300) inclut :

une couche d'incorporation d'entrée et de codage de position (301) configurée pour produire une représentation à haute dimension de la au moins une trajectoire partielle (111) ;
une couche d'attention à têtes multiples masquée (303) configurée pour s'assurer que le modèle de prédiction de trajectoire (103) prédit l'emplacement de l'objet sur la base d'emplacements observés dans la au moins une trajectoire partielle (111) ;
une première couche d'ajout et de normalisation (305) configurée pour ajouter des sorties de la couche d'intégration d'entrée et de codage de position (301), et de la couche d'attention à têtes multiples masquée (303), et normaliser une somme résultante ;
une couche d'attention à têtes multiples (307) configurée pour calculer de multiples fonctions d'attention avec différentes projections apprises ;
une deuxième couche d'ajout et de normalisation (309) configurée pour ajouter et normaliser la somme normalisée délivrée en sortie par la première couche d'ajout et de normalisation (305) et les fonctions d'attention multiples délivrées en sortie par la couche d'attention à têtes multiples (307) ;
une couche à action directe (311) configurée pour transformer une sortie normalisée de la seconde couche d'addition et de normalisation (309), en utilisant une transformation linéaire ; et
une troisième couche d'ajout et de normalisation (313) configurée pour ajouter et normaliser la sortie normalisée de la deuxième couche d'ajout et de normalisation (309) et la sortie normalisée transformée de la couche à action directe (311).

4. Système (200) selon la revendication 1, dans lequel le modèle de prédiction de particule entrante (105) inclut une pile de décodeurs à transformateur, et dans lequel chaque décodeur à transformateur (400) inclut :

une couche d'attention à têtes multiples masquée (401) configurée pour s'assurer que le modèle de prédiction de particule entrante (105) prédit une particule entrante sur la base d'emplacements observés de la séquence de vecteurs d'observation (121) ;

une première couche d'ajout et de normalisation (403) configurée pour ajouter des sorties de la couche d'attention à têtes multiples masquée (401), et normaliser une somme résultante ;

une couche d'attention à têtes multiples (405) configurée pour calculer de multiples fonctions d'attention avec différentes projections apprises ;

une deuxième couche d'ajout et de normalisation (407) configurée pour ajouter et normaliser la somme normalisée délivrée en sortie par la première couche d'ajout et de normalisation (403) et les fonctions d'attention multiples délivrées en sortie par la couche d'attention à têtes multiples (405) ;

une couche à action directe (409) configurée pour transformer une sortie normalisée de la seconde couche d'addition et de normalisation (407), en utilisant une transformation linéaire ; et

une troisième couche d'ajout et de normalisation (411) configurée pour ajouter et normaliser la sortie normalisée de la deuxième couche d'ajout et de normalisation (407) et la sortie normalisée transformée de la couche à action directe (409).

5. Système (200) selon la revendication 1, dans lequel le modèle de prédiction de trajectoire (103) est formé avec une fonction de perte d'entropie croisée, et dans lequel la fonction de perte d'entropie croisée calcule un logarithme négatif d'un emplacement prédit du au moins un objet pour une destination suivante vraie.

6. Système (200) selon la revendication 1, dans lequel le modèle de prédiction de particule entrante (105) est formé avec une fonction de perte d'erreur quadratique moyenne, et dans lequel la fonction de perte d'erreur quadratique moyenne calcule une moyenne de différences quadratiques entre des particules entrantes prédites et des valeurs vraies correspondantes.

7. Procédé mis en œuvre par ordinateur pour estimer une densité de trafic future (109) dans un environnement, dans lequel l'environnement inclut de multiples points d'entrée et de multiples points de sortie, le procédé comprenant les étapes consistant à :

recevoir, pour au moins un objet, au moins une trajectoire partielle (111) et une séquence de vecteurs d'observation (121), dans lequel le au moins un objet se déplace d'un point d'entrée des multiples points d'entrée à un point de sortie des multiples points de sortie, et dans lequel le au moins un objet est représenté par une pluralité de particules ;

traiter :

(1) la au moins une trajectoire partielle (111) avec un modèle de prédiction de trajectoire (103) formé pour prédire une distribution probabiliste (113) d'un emplacement du au moins un objet sur différents emplacements dans l'environnement à un instant futur (t4) ; et

prédire, sur la base de la distribution probabiliste prédite (113), un emplacement de chaque particule de la pluralité de particules à l'instant temporel futur (t4) ; et

(2) la séquence de vecteurs d'observation (121) avec un modèle de prédiction de particule entrante (105) formé pour prédire une probabilité d'observer une particule entrante à chaque point d'entrée à l'instant futur (t4) ; et

estimer la densité de trafic future (109) pour l'instant futur (t4) avec un modèle d'échantillonnage itératif (107) basé sur l'emplacement prédit de chaque particule et la probabilité prédite d'observer la particule entrante à chaque point d'entrée à l'instant futur (t4),

dans lequel au moins l'un des points a) à b) suivants est prévu :

a) dans lequel l'environnement est un espace intérieur (500) incluant de multiples cabines (501-517), et dans lequel le au moins un processeur (215) est en outre configuré pour déployer au moins un robot de service (519a-d) vers au moins une cabine des multiples cabines (501-517), sur la base de la densité de trafic future estimée (109) dans l'environnement ; ou

dans lequel l'environnement est un espace extérieur (600) incluant de multiples routes (601-607) et un feu de trafic (609) à une jonction des multiples routes (601-607), et dans lequel le au moins un processeur (215) est en outre configuré pour commander le feu de trafic (609) sur la base de la densité de trafic future estimée (109) dans l'environnement ;

b) dans lequel la séquence de vecteurs d'observation (121) est obtenue à partir de caméras installées dans l'environnement.

8. Procédé selon la revendication 7, dans lequel pour prédire, sur la base de la distribution probabiliste prédite (113), l'emplacement de chaque particule de la pluralité de particules à l'instant futur (t4), le procédé comprend en outre un échantillonnage d'un emplacement de chaque particule à partir de la distribution probabiliste prédite (113).

9. Procédé selon la revendication 7, dans lequel le modèle de prédiction de trajectoire (103) inclut une pile de décodeurs de transformateur, et dans lequel chaque décodeur de transformateur (300) inclut :

une couche d'incorporation d'entrée et de codage de position (301) configurée pour produire une représentation à haute dimension de la au moins une trajectoire partielle (111) ;
une couche d'attention à têtes multiples masquée (303) configurée pour s'assurer que le modèle de prédiction de trajectoire (103) prédit l'emplacement de l'objet sur la base d'emplacements observés dans la au moins une trajectoire partielle (111) ;
une première couche d'ajout et de normalisation (305) configurée pour ajouter des sorties de la couche d'intégration d'entrée et de codage de position (301), et de la couche d'attention à têtes multiples masquée (303), et normaliser une somme résultante ;
une couche d'attention à têtes multiples (307) configurée pour calculer de multiples fonctions d'attention avec différentes projections apprises ;
une deuxième couche d'ajout et de normalisation (309) configurée pour ajouter et normaliser la somme normalisée délivrée en sortie par la première couche d'ajout et de normalisation (305) et les fonctions d'attention multiples délivrées en sortie par la couche d'attention à têtes multiples (307) ;
une couche à action directe (311) configurée pour transformer une sortie normalisée de la seconde couche d'addition et de normalisation (309), en utilisant une transformation linéaire ; et
une troisième couche d'ajout et de normalisation (313) configurée pour ajouter et normaliser la sortie normalisée de la deuxième couche d'ajout et de normalisation (309) et la sortie normalisée transformée de la couche à action directe (311) ; ou

10. Procédé selon la revendication 7, dans lequel le modèle de prédiction de particule entrante (105) inclut une pile de décodeurs de transformateur, et dans lequel chaque décodeur de transformateur (400) inclut :

une couche d'attention à têtes multiples masquée (401) configurée pour s'assurer que le modèle de prédiction de particule entrante (105) prédit une particule entrante sur la base d'emplacements observés de la séquence de vecteurs d'observation (121) ;
une première couche d'ajout et de normalisation (403) configurée pour ajouter des sorties de la couche d'attention à têtes multiples masquée (401), et normaliser une somme résultante ;
une couche d'attention à têtes multiples (405) configurée pour calculer de multiples fonctions d'attention avec différentes projections apprises ;
une deuxième couche d'ajout et de normalisation (407) configurée pour ajouter et normaliser la somme normalisée délivrée en sortie par la première couche d'ajout et de normalisation (403) et les fonctions d'attention multiples délivrées en sortie par la couche d'attention à têtes multiples (405) ;
une couche à action directe (409) configurée pour transformer une sortie normalisée de la seconde couche d'addition et de normalisation (407), en utilisant une transformation linéaire ; et
une troisième couche d'ajout et de normalisation (411) configurée pour ajouter et normaliser la sortie normalisée de la deuxième couche d'ajout et de normalisation (407) et la sortie normalisée transformée de la couche à action directe (409).

11. Procédé selon la revendication 7, dans lequel le modèle de prédiction de trajectoire (103) est formé avec une fonction de perte d'entropie croisée, et dans lequel la fonction de perte d'entropie croisée calcule un logarithme négatif d'un emplacement prédit du au moins un objet pour une destination suivante vraie.

12. Procédé selon la revendication 7, dans lequel le modèle de prédiction de particule entrante (105) est formé avec une fonction de perte d'erreur quadratique moyenne, et dans lequel la fonction de perte d'erreur quadratique moyenne calcule une moyenne de différences quadratiques entre des particules entrantes prédites et des valeurs vraies correspondantes.

13. Support de stockage lisible par ordinateur non transitoire sur lequel est incorporé un programme qui, lorsqu'il est exécuté par un processeur (215), amène le processeur à mettre en œuvre un procédé pour estimer une densité de trafic future (109) dans un environnement, dans lequel l'environnement inclut de multiples points d'entrée et de multiples points de sortie, le procédé comprenant les étapes consistant à :

recevoir, pour au moins un objet, au moins une trajectoire partielle (111) et une séquence de vecteurs d'observation (121), dans lequel le au moins un objet se déplace d'un point d'entrée des multiples points d'entrée à un point de sortie des multiples points de sortie, et dans lequel le au moins un objet est représenté par une pluralité de particules ;
traiter :

(1) la au moins une trajectoire partielle (111) avec un modèle de prédiction de trajectoire (103) formé pour prédire une distribution probabiliste (113) d'un emplacement du au moins un objet sur différents emplacements dans l'environnement à un instant futur (t4) ; et

prédire, sur la base de la distribution probabiliste prédite (113), un emplacement de chaque particule de la pluralité de particules à l'instant temporel futur (t4) ; et
(2) la séquence de vecteurs d'observation (121) avec un modèle de prédiction de particule entrante (105) formé pour prédire une probabilité d'observer une particule entrante à chaque point d'entrée à l'instant futur (t4) ; et estimer la densité de trafic future (109) pour l'instant futur (t4) avec un modèle d'échantillonnage itératif (107) basé sur l'emplacement prédit de chaque particule et la probabilité prédite d'observer la particule entrante à chaque point d'entrée à l'instant futur (t4),
dans lequel au moins l'un des points a) à b) suivants est prévu :

a) dans lequel l'environnement est un espace intérieur (500) incluant de multiples cabines (501-517), et dans lequel le au moins un processeur (215) est en outre configuré pour déployer au moins un robot de service (519a-d) vers au moins une cabine des multiples cabines (501-517), sur la base de la densité de trafic future estimée (109) dans l'environnement ; ou

dans lequel l'environnement est un espace extérieur (600) incluant de multiples routes (601-607) et un feu de trafic (609) à une jonction des multiples routes (601-607), et dans lequel le au moins un processeur (215) est en outre configuré pour commander le feu de trafic (609) sur la base de la densité de trafic future estimée (109) dans l'environnement ;
b) dans lequel la séquence de vecteurs d'observation (121) est obtenue à partir de caméras installées dans l'environnement.

14. Support de stockage lisible par ordinateur non transitoire selon la revendication 13, dans lequel pour prédire, sur la base de la distribution probabiliste prédite (113), l'emplacement de chaque particule de la pluralité de particules à l'instant futur (t4), le procédé comprend en outre un échantillonnage d'un emplacement de chaque particule à partir de la distribution probabiliste prédite (113).

FIG.1A

EP 4 457 791 B1

EP 4 457 791 B1

FIG.1C

time: $t_1$ $t_2$ $t_3$ $t_4$ $t_5$

| | $t_1$ | $t_2$ | $t_3$ | $t_4$ | $t_5$ | | | | |
|---|---|---|---|---|---|---|---|---|---|
| Particle-1 trajectory | 1 | 3 | 2 | 5 | 0 | 0 | 0 | 0 | 0 |
| Particle-2 trajectory | 1 | 3 | 2 | 5 | 0 | 0 | 0 | 0 | 0 |
| Particle-3 trajectory | 1 | 3 | 2 | 6 | 0 | 0 | 0 | 0 | 0 |
| Particle-4 trajectory | 1 | 3 | 2 | 6 | 0 | 0 | 0 | 0 | 0 |
| Particle-5 trajectory | 1 | 3 | 2 | 4 | 0 | 0 | 0 | 0 | 0 |

117a
117

Trajectory prediction model — 103

| | $t_1$ | $t_2$ | $t_3$ | $t_4$ | $t_5$ | $t_6$ | $t_7$ | $t_8$ | $t_9$ |
|---|---|---|---|---|---|---|---|---|---|
| Particle-1 trajectory | 1 | 3 | 2 | 5 | 3 | 0 | 0 | 0 | 0 |
| Particle-2 trajectory | 1 | 3 | 2 | 5 | 3 | 0 | 0 | 0 | 0 |
| Particle-3 trajectory | 1 | 3 | 2 | 6 | 5 | 0 | 0 | 0 | 0 |
| Particle-4 trajectory | 1 | 3 | 2 | 6 | 4 | 0 | 0 | 0 | 0 |
| Particle-5 trajectory | 1 | 3 | 2 | 4 | 5 | 0 | 0 | 0 | 0 |

119a
119

time: $t_1$ $t_2$ $t_3$ $t_4$ $t_5$ $t_6$ $t_7$ $t_8$ $t_9$

## FIG.1D

| $Z_1$ | $Z_2$ | $Z_3$ | $Z_4$ | $Z_5$ | $Z_6$ | — 121 |

Entering particle prediction model — 105

Ingress point:  1  2  3  4  5  6  — 123

| $Z_2$ | $Z_3$ | $Z_4$ | $Z_5$ | $Z_6$ | $Z_7$ | — 125 |

EP 4 457 791 B1

EP 4 457 791 B1

FIG.1E

125

| $Z_2$ | $Z_3$ | $Z_4$ | $Z_5$ | $Z_6$ | $Z_7$ |
|---|---|---|---|---|---|

109

Future traffic density

107

Iterative sampling model

117

| 1 | 3 | 2 | 5 | 0 | 0 | 0 | 0 | 0 |
|---|---|---|---|---|---|---|---|---|
| 1 | 3 | 2 | 5 | 0 | 0 | 0 | 0 | 0 |
| 1 | 3 | 2 | 6 | 0 | 0 | 0 | 0 | 0 |
| 1 | 3 | 2 | 6 | 0 | 0 | 0 | 0 | 0 |
| 1 | 3 | 2 | 4 | 0 | 0 | 0 | 0 | 0 |

# FIG.1F

FIG.1G

FIG.2

EP 4 457 791 B1

FIG.3

FIG.4

- 400
- Add and Norm — 411
- Feed forward — 409
- Add and Norm — 407
- Multi-head attention — 405
- Add and Norm — 403
- Masked multi-head attention — 401
- $Z_1$ | $Z_2$ | $Z_3$ | $Z_4$ | $Z_5$ | $Z_6$ — 121

EP 4 457 791 B1

FIG.5

EP 4 457 791 B1

EP 4 457 791 B1

FIG.6

36

# FIG.7A

700

701

Receiving, for at least one object, at least one partial trajectory and a sequence of observation vectors

703

Processing the at least one partial trajectory with a trajectory prediction model trained to predict a probabilistic distribution of a location of the at least one object over different locations in an environment at a future time instant

705

Predicting, based on the predicted probabilistic distribution, a location of each particle of a plurality of particles at the future time instant

A

EP 4 457 791 B1

# FIG.7B

(A)

707

Processing the sequence of observation vectors with an entering particle prediction model trained to predict a probability of observing an entering particle at each ingress point at the future time instant

709

Estimating the future traffic density based on the predicted location of each particle and the predicted probability of observing the entering particle at each ingress point at the future time instant

# FIG.8

External Sensors — 835

Machine — 837

Environment — 839

External Memory — 833

One or more Input /Output Devices — 841

External Receiver — 823

External Transmitter — 829

Network — 845

800

801 — Power Source

809

821

827 — Receiver

Input Interface

803 — Processor

831 — Transmitter

Output Interface — 825

805 — Memory

807 — Storage device

NIC — 843

811 — High Speed Interface

High Speed Expansion Ports — 815

813 — Low Speed Interface

Low Speed Expansion Ports — 817

847 — User Interface (HMI)

Low Speed Connection Ports — 819

851 — Keyboard

849 — Display

853 — Server

855 — Rack Server

EP 4 457 791 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020042799 A1

**Non-patent literature cited in the description**

- **VASWANI ASHISH et al.** *Attention Is All You Need*, 12 June 2017